# EUROPEAN PATENT APPLICATION

(11) **EP 2 755 378 A1**
(43) Date of publication of application: **16.07.2014**
(21) Application number: 13184469.8
(22) Date of filing: 13.09.2013
(51) Int. Cl.: H04N 5/232, G03B 13/18, G03B 13/32

(54) **Focus aid system**

(30) Priority: 14.01.2013 KR 20130004041
(71) Applicant: Samsung Electronics Co., Ltd, Gyeonggi-do 443-742 (KR)
(72) Inventor: Hamada, Masataka, Gyeonggi-do (KR)
(74) Representative: Fearnside, Andrew Simon

(57) **Abstract**

A focus aid system includes a replaceable lens configured to adjust a location of a focus lens in a manual focusing mode, a focus lens location detection sensor, an imaging device, a controller that calculates a focus detection evaluation value based on an image signal received from the imaging device and matches the calculated focus detection evaluation value to focus lens location information received from the focus lens location detection sensor, a peak hold unit that stores a maximum focus detection evaluation value and a corresponding focus lens location as a peak value and a peak location, and a display unit. The controller determines the focused state based on at least one of a comparison of the focus detection evaluation value with the peak value or a comparison of the focus lens location and the peak location. The controller displays information about the focused state on the display unit.

## Description

### CROSS-REFERENCE TO RELATED PATENT APPLICATION

This application claims the priority benefit of Korean Patent Application No. 10-2013-0004041, filed on January 14, 2013, in the Korean Intellectual Property Office, the disclosure of which is incorporated herein in its entirety by reference.

### BACKGROUND

### 1. Field

The disclosure herein relates to a focus aid system representing a focus state during a manual focusing operation in a digital photographing apparatus using a contrast auto-focus (AF) method.

### 2. Related Art

In photographing apparatuses such as digital photographing apparatuses or camcorders, a subject that is to be photographed has to be focused exactly in order to take a clear still image or a moving picture. In particular, as digital photographing apparatuses and digital camcorders have developed, the focusing operation is mainly performed as an auto focusing (AF) method.

However, if a user wants to focus at an arbitrary location or wants to take a picture of a desired frame, a manual focusing (MF) method is still used.

In the MF method, it is difficult to identify whether the focusing is exactly performed until an actual photographing is made. Also, if the user is not trained to use the MF method, a time for manipulating a focus lens until an image that is well focused is taken is further increased.

Some conventional products may have a function that represents whether the subject is focused; however, it is not clear which way the focus lens has to be adjusted actually in the MF operation. Also, it is not clear where the focused location is, and thus, it is difficult for the user to reduce a focusing time and to take a well-focused image.

### SUMMARY

According to the present invention there is provided an apparatus and method as set forth in the appended claims. Other features of the invention will be apparent from the dependent claims, and the description which follows.

Various embodiments of the invention provide a digital photographing apparatus capable of performing a manual focusing (MF) operation, by performing a focus detection in a contrast type to detect a maximum value of a focus detection evaluation and display a manipulation direction of the MF operation of an imaging lens.

Embodiments of the invention also provide a digital photographing apparatus using an MF operation, which determines that the digital photographing apparatus is in a focused state automatically and displays the determination result so as to notify a user of the MF operation completion.

According to an embodiment, a focus aid system includes a replaceable lens, a focus lens location detection sensor, an imaging device, a controller, a peak hold unit, and a display unit. The replaceable lens is configured to adjust a location of a focus lens in a manual focusing mode. The focus lens location detection sensor outputs focus lens location information about the location of the focus lens. The imaging device captures light transmitted through the replaceable lens to generate an image signal for a captured image. The controller receives the image signal from the imaging device. The controller calculates a focus detection evaluation value based on the image signal. The controller matches the calculated focus detection evaluation value to the focus lens location information about the focus lens location. The peak hold unit stores a maximum focus detection evaluation value and a focus lens location that corresponds to the maximum focus detection evaluation value as a peak value and a peak location, respectively, for a predetermined time period. The display unit displays information about a focused state of the focus lens. The controller determines the focused state based on at least one of a comparison of the focus detection evaluation value with the peak value stored in the peak hold unit or a comparison of the focus lens location and the peak location stored in the peak hold unit. The controller displays information about the focused state on the display unit.

When the focus lens location is within a predetermined range with respect to the peak location, the controller may determine that the focus lens is in the focused state and displays an in-focus display.

When the focus detection evaluation value is within a predetermined ratio with respect to the peak value, the controller may determine that the focus lens is in the focused state and display an in-focus display.

The peak hold unit may store an extreme value of the focus detection evaluation value and a focus lens location that corresponds to the extreme focus detection evaluation value as the peak value and the peak location for the predetermined time period.

The peak hold unit may store a maximum value of the focus detection evaluation value that is detected when the focus lens is driven without reversal of a driving direction by the MF operation and a focus lens location that corresponds to the maximum value as the peak value and the peak location for the predetermined time period.

The peak hold unit may store a maximum non-linear conversion value of the focus detection evaluation value and a focus lens location that corresponds to the maximum non-linear conversion value as the peak value and the peak location for the predetermined time period. The controller may determine that the focus lens is in the focused location when a non-linear conversion value of the current focus detection evaluation value is within a predetermined ratio with respect to the peak value stored in the peak hold unit and display an in-focus state display.

According to another embodiment, a focus aid system includes a replaceable lens, a focus lens location detection sensor, an imaging device, a controller, a peak hold unit, and a display unit. The replaceable lens may be configured to adjust a location of a focus lens in a manual focusing (MF) mode. The focus lens location detection sensor may output focus lens location information about the location of the focus lens. The imaging device may capture light transmitted through the replaceable lens to generate an image signal for a captured image. The controller may receive the image signal from the imaging device. The controller may calculate a focus detection evaluation value based on the image signal. The controller may match the calculated focus detection evaluation value to the focus lens location information about the focus lens location. The peak hold unit may store a maximum of the focus detection evaluation value and a focus lens location that corresponds to the maximum focus detection evaluation value as a peak value and a peak location, respectively, for a predetermined time period. The display unit may display information about a focused state of the focus lens. The controller may determine a manual manipulation direction of the focus lens for movement of the focus lens to a focused location based on a comparison of the peak location with a current location of the focus lens. The controller may display a focus state that includes the manual manipulation direction.

The peak hold unit may store an extreme value of the focus detection evaluation value detected when the focus lens is driven without reversal of a driving direction of an MF operation and a focus lens location that corresponds to the extreme value as the peak value and the peak location for the predetermined time period.

The controller may record the focus lens location and the focus detection evaluation value at a predetermined interval.

The controller may determine a current rotation direction of the focus lens based on a comparison of a current focus detection evaluation value with a previous focus detection evaluation value, and may display the manual manipulation direction based on the current operating direction of the focus lens.

The controller may compare a current focus detection evaluation value with a previous focus detection evaluation value to display a direction that corresponds to the larger focus detection evaluation value as the manual manipulation direction.

The controller may determine the manual manipulation direction of the focus lens based on the focus lens location and information about a rotation direction of a focus ring, and may display the manual manipulation direction.

The display of the manual manipulation direction may indicate a rotation direction of the focus lens.

The controller may calculate the focus detection evaluation value for the captured image from the image signal in a previously set focus detection region.

The controller may display the previously set focus detection region with the manual manipulation direction.

The controller may determine whether there is a maximum focus detection evaluation value, and if there is no maximum focus detection evaluation value, the controller may compare the current focus detection evaluation value with the previous focus detection evaluation value and display a direction that corresponds to the larger focus detection evaluation value as the manual manipulation direction.

According to another embodiment, a focus aid system includes a replaceable lens, a focus lens location detection sensor, an imaging device, a controller, a display unit. The replaceable lens is configured to adjust a location of a focus lens in a manual focusing (MF) mode. The focus lens location detection sensor outputs focus lens location information about the location of the focus lens. The imaging device captures light transmitted through the replaceable lens to generate an image signal for a captured image. The controller receives the image signal from the imaging device. The controller calculates a focus detection evaluation value based on the captured image. The controller matches the calculated focus detection evaluation value to the focus lens location information about the focus lens location. The controller detects a maximum value of the detected focus detection evaluation value and a focus lens location that corresponds to the maximum focus detection evaluation value. The display unit displays information about a focused state of the focus lens. If the maximum value of the focus detection evaluation value is not detected, the controller compares a current focus detection evaluation value and a previous focus detection evaluation value and displays a direction that corresponds to the larger focus detection evaluation value as a manual manipulation direction of the focus lens.

### BRIEF DESCRIPTION OF THE DRAWINGS

The above and other features and advantages of the embodiments will become more apparent by describing in detail exemplary embodiments thereof with reference to the attached drawings in which:
FIG. 1 is a block diagram of a digital photographing apparatus according to an embodiment;
FIG. 2 is a block diagram of a controller in the digital photographing apparatus, according to an embodiment;
FIG. 3 is a timing diagram showing relation between a timing of detecting a focus detection evaluation value and a lens location;
FIG. 4 is a timing diagram of a case where a focus aid (FA) is shown on a focus aid display while manually operating a focus lens, according to an embodiment;
FIG. 5 is a timing diagram showing another example of a focus aid display while manipulating the focus lens manually, according to another embodiment;
FIGS. 6A, 6B, 6C, 7A, 7B, 7C, 8A, 8B, 8C, 9A, and 9B are diagrams illustrating embodiments of a focus aid display;
FIG. 10 is a flowchart illustrating operation A1 that is an initiating operation of a digital photographing apparatus;
FIG. 11 is a flowchart illustrating an S1 interrupt operation during operation A1 of the digital photographing apparatus illustrated in FIG. 10;
FIG. 12 is a flowchart illustrating an S2 interrupt operation during operation A1 of the digital photographing apparatus illustrated in FIG. 10;
FIG. 13 is a flowchart illustrating moving picture capturing operation of the digital photographing apparatus of FIG. 10;
FIGS. 14A and 14B are flowcharts illustrating processes for an FA display according to an embodiment;
FIG. 15 is a flowchart illustrating processes of detection of a peak value and a peak location;
FIG. 16 is a flowchart illustrating processes of an indefinite direction display;
FIG. 17 is a flowchart illustrating processes of a near direction display;
FIG. 18 is a flowchart illustrating operations of a replaceable lens according to an embodiment;
FIGS. 19A and 19B are flowcharts illustrating processes for an FA display according to another embodiment;
FIG. 20 is a flowchart illustrating processes for an FA display based on an extreme value and an extreme value location in FIG. 19;
FIGS. 21A and 21B are flowcharts illustrating processes for an FA display according to another embodiment;
FIG. 22 is a diagram showing a relation between a focus lens manipulation, a focus detection evaluation value, and a focus aid display illustrated with reference to FIG. 4; and
FIG. 23 is a diagram showing 15 divided focus detection regions according to an embodiment.

### DETAILED DESCRIPTION

As the invention allows for various changes and numerous embodiments, particular embodiments will be illustrated in the drawings and described in detail in the written description. However, this is not intended to limit the invention to particular modes of practice, and it is to be appreciated that all changes, equivalents, and substitutes that do not depart from the spirit and technical scope of the invention are encompassed in the invention. In the description of the invention, certain detailed explanations of related art are omitted when it is deemed that they may unnecessarily obscure the essence of the invention.

Hereinafter, the inventive concept will be described more fully with reference to the accompanying drawings, in which exemplary embodiments of the inventive concept are shown. Like reference numerals in the drawings denote like elements. As used herein, the term "and/or" includes any and all combinations of one or more of the associated listed items. Expressions such as "at least one of," when preceding a list of elements, modify the entire list of elements and do not modify the individual elements of the list.

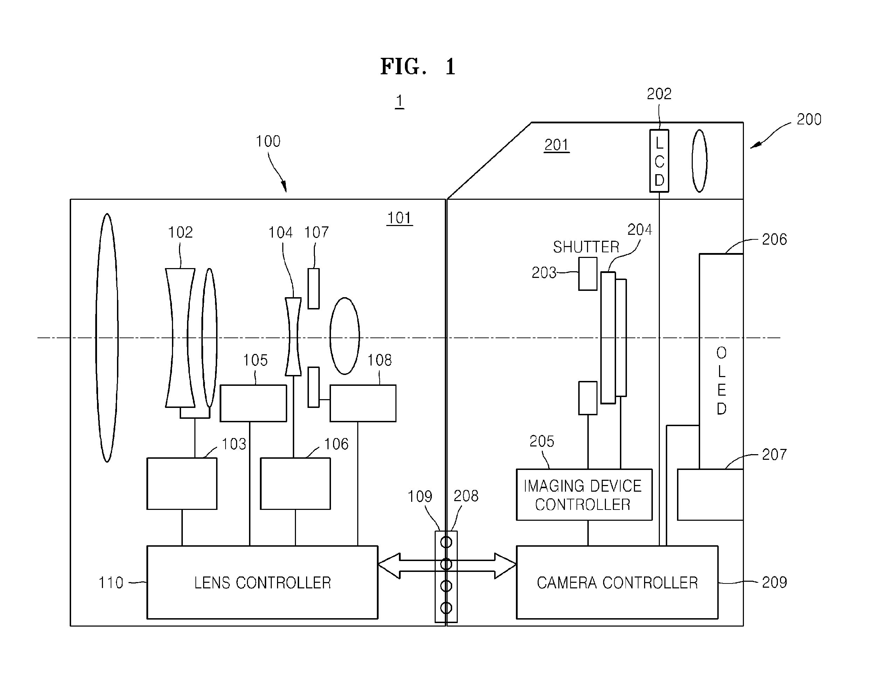

FIG. 1 is a diagram showing a digital photographing apparatus 1 according to an embodiment.

Referring to FIG. 1, the digital photographing apparatus 1 (e.g., a camera) includes a replaceable lens 100 and a main body 200. The replaceable lens 100 has a focus detecting function, and the main body 200 allows for driving of a focus lens 104 of the replaceable lens 100.

The replaceable lens 100 (hereinafter, referred to as a 'lens') includes a focusing optics 101, a zoom lens location detection sensor 103, a lens driving actuator 105, a focus lens location detection sensor 106, an aperture driving actuator 108, a lens controller 110, and a lens mount 109.

The focusing optics 101 includes a zoom lens 102 for zooming, the focus lens 104 for changing a focused location, and an aperture 107. The zoom lens 102 and the focus lens 104 may be formed as lens groups, each including a plurality of lenses.

The zoom lens location detection sensor 103 and the focus lens location detection sensor 106, respectively, detect locations of the zoom lens 102 and the focus lens 104. A timing for detecting the location of the focus lens 104 may be set by the lens controller 110 or a digital photographing apparatus controller (camera controller) 209 that will be described below. For example, the timing for detecting the location of the focus lens 104 may be a timing for performing a focus detection from an image signal.

The lens driving actuator 105 and the aperture driving actuator 108 are controlled by the lens controller 110 to respectively drive the focus lens 104 and the aperture 107. In particular, the lens driving actuator 105 drives the focus lens 104 in an optical axis direction.

Also, the focus lens 104 may be driven by a user through manual manipulation (e.g., manually), and a location of the focus lens 104 through the manual manipulation may be detected. In addition, the focus lens location detection sensor 106 is capable of detecting a rotation direction of the focus lens 104. The rotation direction may vary depending on the replaceable lens 100. For example, in a first replaceable lens 100, the focus lens 104 is moved to a near subject photographing direction (hereinafter, referred to as "near direction") due to a rotation in a right direction (R) and the focus lens 104 is moved to an infinite subject photographing direction (hereinafter, referred to as "infinite direction") due to a rotation in a left direction (L), and on the contrary, in a second replaceable lens 100, the focus lens 104 may be moved to the near direction or the infinite direction due to the rotation in opposite directions to the ones above (e.g., left and right directions, respectively).

The lens controller 110 transmits information about the detected location of the focus lens 104 to the main body 200. The lens controller 110 may transmit the detected location information of the focus lens 104 to the main body 200 in a first case where there is a variation in the location of the focus lens 104, or in a second case where the camera controller 209 requests the location information of the focus lens 104. Otherwise, the lens controller 110 may transmit the location information of the focus lens 104 to the main body 200 at every 1 frame of a photographing operation.

The information about the focus lens 104 may include information about the rotation direction of the focus lens 104 by the manual manipulation described above.

The lens mount 109 includes a lens side communication pin (not shown) that is engaged with a digital photographing apparatus side communication pin (not shown) to be used in a transfer path of data, information, or control signals.

Next, the main body 200 is configured as follows:
The main body 200 includes a viewfinder 201, a shutter 203, an imaging device 204, an imaging device controller 205, a display unit 206, a manipulation unit 207, the camera controller 209, and a digital photographing apparatus mount 208.
The viewfinder 201 may include a liquid crystal display (LCD) unit 202 so as to display captured images in real-time.
The shutter 203 determines a time of exposing light to the imaging device 204, e.g., an exposure time.
The imaging device 204 generates an image signal by capturing light transmitting through the focusing optics 101 of the lens 100. The imaging device 204 may include a plurality of photoelectric conversion units (not shown) arranged as a matrix and a vertical and/or horizontal transfer path for moving electric charges from the photoelectric conversion units to read the image signal. The imaging device 204 may be a charge-coupled device (CCD) sensor or a complementary metal oxide semiconductor (CMOS) sensor.
The imaging device controller 205 generates a timing signal and controls the imaging device 204 to perform an imaging operation in synchronization with the timing signal. In addition, the imaging device controller 205 sequentially reads horizontal image signals when charge accumulation in each scanning line is finished, and the horizontal image signal that is read is used to detect the focus in the camera controller 209.
The display unit 206 displays various images and information. The display unit 206 may be an organic light-emitting diode (OLED) display or a liquid crystal display (LCD). Also, a touch panel may be provided on a cover of the display unit 206 so that the user may input a touch location while viewing images.
The manipulation unit 207 is a portion for inputting various commands from the user in order to operate the digital photographing apparatus 1. The manipulation unit 207 may include at least one of a shutter-release button, a main switch, a mode dial, or a menu button.
The camera controller 209 performs focus detection from the image signal generated by the imaging device 204 to calculate a focus detection evaluation value. Also, the camera controller 209 conserves the focus detection evaluation value at a timing of the focus detection based on the timing signal generated by the imaging device controller 205, and calculates a focus location by using the conserved focus detection evaluation value and the lens location information transmitted from the lens 100. The calculation result of the focus location is transmitted to the lens 100.
The digital photographing apparatus mount 208 includes a digital photographing apparatus side communication pin (not shown).

Hereinafter, operations of the lens 100 and the main body 200 will be described below.

When a subject is photographed, the main switch included in the manipulation unit 207 is manipulated to start operations of the digital photographing apparatus 1. The digital photographing apparatus 1 may first perform a live view display operation.

Light reflected from the subject and transmitted through the focusing optics 101 is incident on the imaging device 204. Here, the shutter 203 is in an open state. The light reflected from the subject, which is incident on the imaging device 204, is converted into an electric signal by the imaging device 204 to generate an image signal. The imaging device 204 operates based on the timing signal generated by the imaging device controller 205. The generated image signal of the subject is converted into data that may be displayed by the camera controller 209 and output to the viewfinder 201 or the display unit 206. Such operations are live view display operations, and images displayed by the live view display operations are successively displayed as a moving picture.

During the live view display operations, manual focusing may be available.

After performing the live view display operations, when the shutter-release button included in the manipulation unit 207 is in a half-pressed state, the digital photographing apparatus 1 starts an auto-focusing (AF) operation. The imaging device 204 performs an AF operation by using the generated image signal. In a contrast AF method, a focus location is calculated by using a focus detection evaluation value that affects a contrast value, and the lens 100 is driven based on the calculation result. Here, the focus detection evaluation value is output to the camera controller 209. The camera controller 209 calculates information for controlling the focus lens 104 from the focus detection evaluation value, and transmits the information to the lens controller 110 via the communication pins formed in the lens mount 109 and the digital photographing apparatus mount 208.

The lens controller 110 controls the lens driving actuator 105 based on the received information so that the focus lens 104 is driven in the optical axis direction to perform the AF operation. Since the location of the focus lens 104 is monitored by the focus lens location detection sensor 106, feed-back controlling may be performed.

When the zoom lens 102 is manipulated by the user to zoom, the zoom lens location detection sensor 103 detects the location of the zoom lens 102, and the lens controller 110 changes AF controlling parameters of the focus lens 104 to perform the AF operation again.

Through the above operations, when the subject image is well focused, the shutter-release button may be fully pushed (S2), and the digital photographing apparatus 1 starts an exposure. Here, the camera controller 209 completely closes the shutter 203, and transmits photometric information acquired so far to the lens controller 110 as aperture control information. The lens controller 110 controls the aperture driving actuator 108 based on the aperture control information, and controls the aperture 107 to have an appropriate aperture value. The camera controller 209 controls the shutter 203 based on the photometric information, and opens the shutter 203 for an appropriate exposure time to capture the subject image.

The captured image may be stored in a memory card 212 after performing an image signal process and a data compression process. At the same time, the captured image may be output to the viewfinder 201 or the display unit 206 displaying the subject. The image may be referred to as a quick view or an after-view image.

As such, a series of photographing processes are finished.

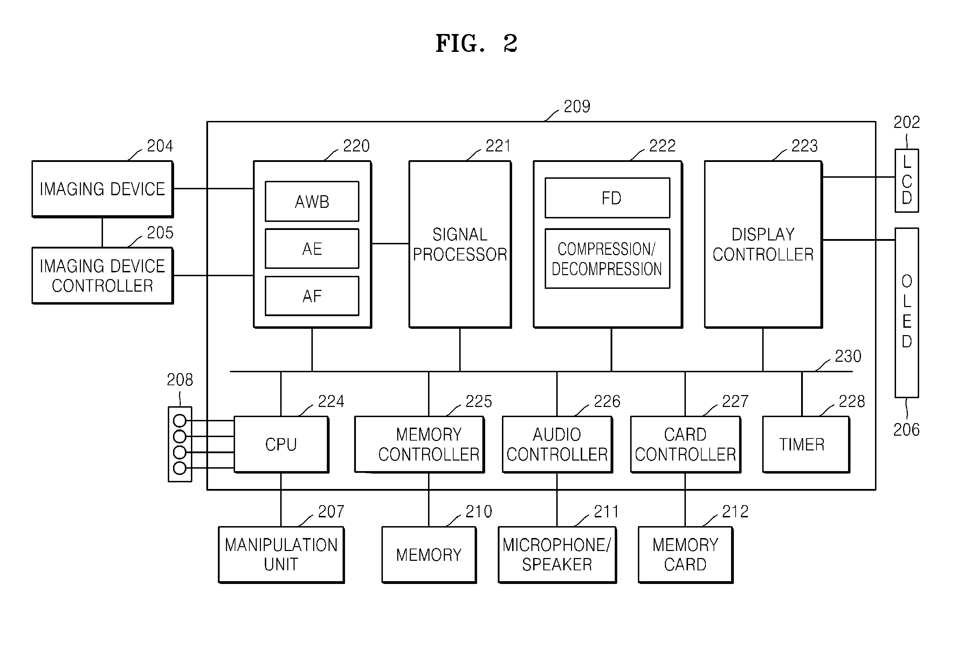

FIG. 2 is a diagram showing the camera controller 209 according to an embodiment.

Referring to FIG. 2, the camera controller 209 includes a pre-processor 220, a signal processor 221, an application unit 222, a display controller 223, a central processing unit (CPU) 224, a memory controller 225, an audio controller 226, a card controller 227, a timer 228, and a main bus 230.

The camera controller 209 transmits various commands and data to each component via the main bus 230.

The pre-processor 220 receives an image signal generated by the imaging device 204, and performs calculations of auto white balance (AWB), auto exposure (AE), and AF. For example, the pre-processor 220 may calculate a focus detection evaluation value for adjusting focus, an AE evaluation value for adjusting the exposure, and an AWB evaluation value for adjusting white balance. The focus detection evaluation value may include a horizontal focus detection evaluation value representing contrast in a horizontal direction. The horizontal focus detection evaluation value may be calculated by using a horizontal image signal read by the imaging device 204.

The signal processor 221 performs a series of image signal processes such as gamma correction to generate a live view image or a captured image that may be displayed on the display unit 206.

The application unit 222 performs a face detection (FD) process from the image signal that has undergone the image signal processes. Through the face detection, a face range, for example, a face boundary, may be defined. Also, data compression and decompression of the image signal may be performed. The image signal may be compressed in a format, for example, a joint picture experts group (JPEG) compression format or H.264 compression format. An image file, including the image data generated by the compression process, may be transmitted to the memory card 212 to be stored therein.

The display controller 223 controls an image output to the LCD unit 202 of the viewfinder 201 or the display unit 206.

The CPU 224 may control overall operations of the components (e.g., the pre-processor 220, the signal processor 221, the application unit 222, the display controller 223, the memory controller 225, the audio controller 226, and the card controller 227). In addition, in the digital photographing apparatus 1 shown in FIG. 1, the CPU 224 communicates with the lens controller 110.

The memory controller 225 controls a memory 210 that temporarily stores data such as captured images and related information, and the audio controller 226 controls a microphone or a speaker 211. Also, the card controller 227 controls the memory card 212 that stores the captured images. The timer 228 calculates time.

Hereinafter, operations of the camera controller 209 will be described below.

When the CPU 224 senses a manipulation of the manipulation unit 207, the CPU 224 operates the imaging device controller 205 via the pre-processor 220. The imaging device controller 205 outputs a timing signal to operate the imaging device 204. When an image signal from the imaging device 204 is input to the pre-processor 220, AWB and AE calculations are performed. Results of the AWB and AE calculations are fed back to the imaging device controller 205 so that an image signal having appropriate colors and an appropriate exposure time may be obtained from the imaging device 204.

When the digital photographing apparatus 1 starts to operate, the live view display may be shown. The camera controller 209 inputs the image signal captured with an appropriate exposure time in the pre-processor 220 to calculate the AE evaluation value. The image signal for the live view display may be provided directly to the signal processor 221 without passing through the main bus 230, and then, image signal processes such as a pixel interpolation are performed on the image signal. The image signal, on which the image signal processes are performed, is displayed on the LCD unit 202 and the display unit 206 via the main bus 230 and the display controller 223. The live view display may be updated with a frequency of 60 frames per second (FPS).

When the shutter-release button is in a half-pushed state, the CPU 224 may sense the input of a half-pushed signal S1, and command the lens controller 110 to drive the focus lens 104 for performing the AF via the communication pins formed in the digital photographing apparatus mount 208 and the lens mount 109. Alternatively, when the CPU 224 senses the input of the half-pushed signal S1, the CPU 224 may control the driving of the focus lens 104 for performing the AF. That is, the CPU 224 described herein may be an example of a main controller.

The CPU 224 acquires an image signal from the imaging device 204, and the pre-processor 220 calculates a focus detection evaluation value. The focus detection evaluation value may be calculated based on movement of the focus lens 104. A location of the focus lens 104 where the contrast of the subject image is the largest (e.g., where the focus detection evaluation value is the largest) is calculated through the variation of the focus detection evaluation value, and the focus lens 104 is moved to the calculated location. Such a series of operations corresponds to the AF operation, and the live view display may be continuously updated during the AF operation. Here, the image signal used to display the live view image and the image signal used to calculate the focus detection evaluation value are the same.

Although the replaceable lens 100 may be detachable from the main body 200 as described in FIGS. 1 and 2, the invention is not limited thereto. For example, the lens 100 and the main body 200 may be integrally formed. In this case, the lens mount 109 or the digital photographing apparatus mount 208 may be omitted. The camera controller 209 may perform functions of the lens controller 110. For example, the camera controller 209 may directly control the lens driving actuator 105 and the aperture driving actuator 108, and may directly receive location information from the zoom lens location detection sensor 103 and the focus lens location detection sensor 106.

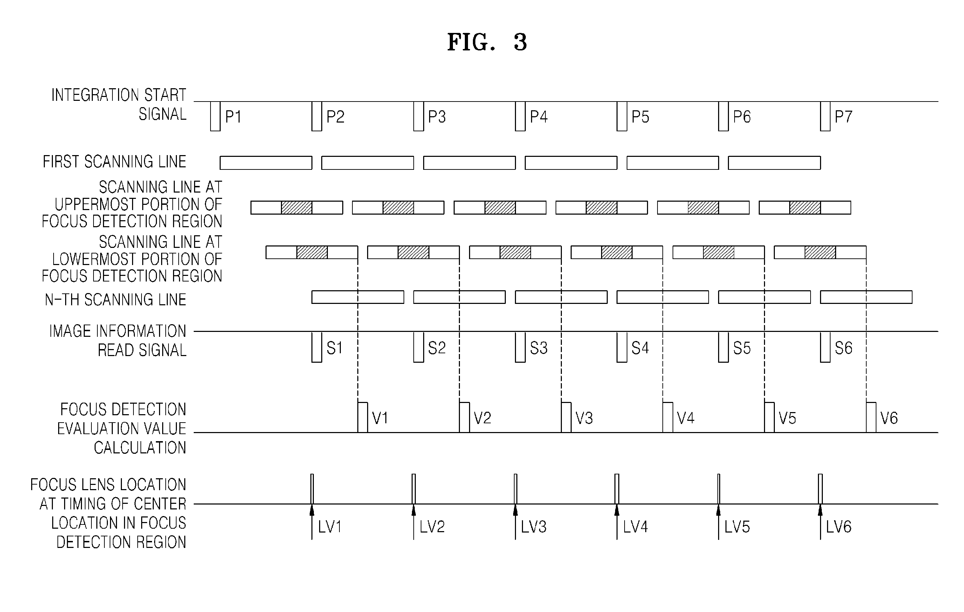

FIG. 3 is a timing diagram showing a relation between a timing of detecting the focus detection evaluation value and the lens location. From the top of the timing diagram, integration start signal timings P1 - P7 of the imaging device 204 , a first scanning line at an uppermost portion of a screen, a scanning line at an uppermost portion of a focus detection region, a scanning line at a lowermost portion of the focus detection region, an N-th scanning line at a lowermost portion of the screen, and image information read signal timings (S1 - S6), timings of calculating the focus detection evaluation values (V1 - V6), and locations of the focus lens 104 at the timing on a center portion of the focus detection region (LV1 - LV6) are shown.

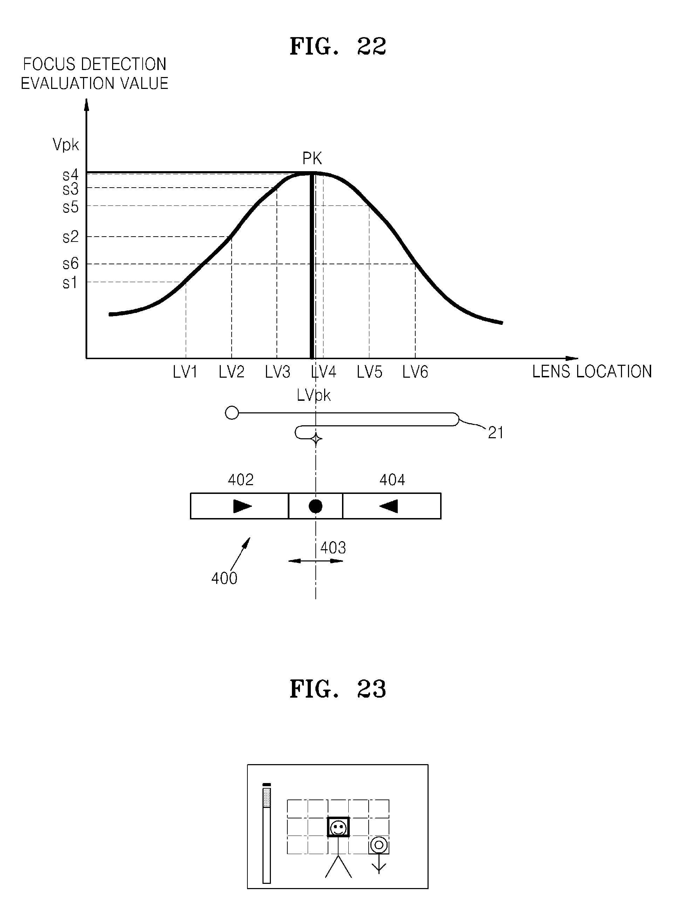

Here, the scanning line at the uppermost portion of the focus detection region is shown in the focus detection region that is located at a center of the screen among 15 divided focus detection regions shown in FIG. 23, for example, the 8th focus detection region from the end (edge). However, the focus detection region is not limited thereto, for example, an n-th focus detection region may be used.

The timings V1 -V6 are timings for outputting the focus detection evaluation values in the focus detection region (e.g., from the scanning line at the uppermost portion of the focus detection region to the scanning line at the lowermost portion of the focus detection region). In addition, in order to adjust the focus, information about the lens location at the center portion timing in the focus detection region may be used. The lens location information LV1 at this timing (e.g., on the center portion) may correspond to the focus detection evaluation value V1 that is representatively detected at the center portion. The center portion timing in the focus detection region (e.g., LV1) and the timing of outputting the focus detection evaluation value (e.g., V1) may be based on the focus detection region and a design of the digital photographing apparatus 1. Hereinafter, LV2 corresponds to V2, LV3 corresponds to V3, LV4 corresponds to V4, LV5 corresponds to V6, and LV6 corresponds to V6, in the same way as described above. The above correspondence is made in the main body 200 of the digital photographing apparatus 1. For example, the camera controller 209 may match the focus lens location information with the corresponding focus detection evaluation value. The replaceable lens 100 in one example only transmits the latest information about the focus lens location at every timing P1 - P7 of the integration start of an imaging device 204. For example, at the timing P3, lens location information LV1 is sent to the main body 200 and the main body 200 receives lens location information LV1 from the replaceable lens 100 at the timing P3, and relates the focus detection evaluation value V1 that would be obtained at the timing when lens location information LV1 is obtained to the lens location information LV1. The lens 100 and the main body 200 do not necessarily communicate with each other at every integration start timing, but may communicate with each other at other timings. In this case, focus detection evaluation values and focus lens locations which correspond with each other but are received at different timings may be matched by the camera controller 209.

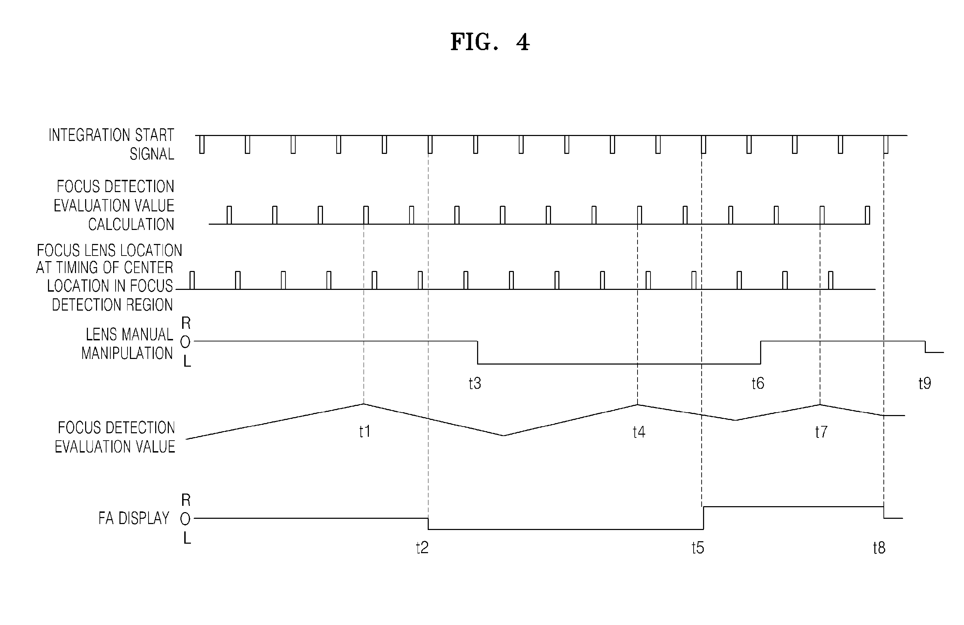

FIG. 4 shows timing signals when the digital photographing apparatus 1 shows a focus aid (FA) display (e.g., a focus detection state display) while a user manually manipulates the focus lens 104. For example, if the imaging device 204 is operated with a frequency of 60 frames per second, a time interval between the imaging device integration starting timings located at the top of FIG. 4 is approximately 17 ms. On the other hand, the manual manipulation may use a time interval of a few seconds generally. Therefore, although more time may be used in an actual timing diagram, the actual manual manipulation time is compressed to be shown herein. In the timing diagram of FIG. 4, from the top of the diagram, the imaging device integration start signal timings, the focus detection evaluation value calculation timings, locations of the focus lens 104 at the timings of being located at the center of the focus detection region, driving of the focus lens 104 by a manual manipulation (right rotation R, left rotation L, and stop O), the focus detection evaluation values, and focus state information for a focus aid (FA) display (right rotation R, left rotation L, focused O, or non-display) are shown.

Referring to FIG. 4, the timing diagram starts when the focus lens 104 is rotated in the right direction (R) by a manual manipulation. For example, a user may manually manipulate a focus ring (not shown) of the lens 100. In the example shown, the focus lens 104 is driven in a near direction from an infinite direction, and focus detection evaluation values are detected during driving of the focus lens 104, and the locations of the focus lens 104 at those timings when the focus detection evaluation values are detected correspond to the focus detection evaluation values. A focus aid (FA) display (e.g., a focus aid display 400 as shown in FIG. 22) at this time does not indicate the right rotation R or the left rotation L. For example, in FIG. 4, the FA display located at O indicates a state where the focus aid display is not shown.

Based on the manual manipulation of the focus lens 104, the focus detection evaluation value is at a peak value at a time t1, where the peak value and the peak location are identified after passing the peak location. In addition, at a next timing t2 when the lens 100 and main body 200 communicate with each other, it may be determined that the focus detection evaluation value is decreased when the focus lens 104 is driven to the right direction, and then, the FA display 400 indicates left rotation L. This represents that the driving direction of the focus lens 104 is directed to the left rotation L. The user of the digital photographing apparatus 1 may view the FA display 400, and then, change the rotation direction of the focus lens 104 to the left rotation L at a timing t3. Then, the user's manual manipulation may be continuously performed to detect a peak value at timing t4. After that, at a communication timing t5 between the lens 100 and the main body 200, it is determined that the focus detection evaluation value is changed to be decreased, and then, the FA display 400 indicates right rotation R.

The user may view the FA display 400, and change the rotation direction of the focus lens 104 to the right rotation R. By repeatedly performing the manipulation, at a timing t8, the FA display 400 is changed to a focused state, for example, an intermediate location between right and left directions. In addition, at a timing t9, the user may view the FA display 400 and stop the driving of the focus lens 104 through the manual manipulation. As such, the user may more easily perform the focusing operation manually while viewing the FA display 400 that represents the rotation direction of the focus lens 104.

The determination of the focused state is made when the location of the focus lens 104 is within a predetermined range, for example, ± 4 Fδ with respect to the peak location after recording the peak value and the peak location. Upon the determination, the FA display 400 representing the focused state is displayed. F denotes an adjustable aperture value, and δ is an allowable image blur of the digital photographing apparatus 1. In a general AF operation, a focused region is set as ± Fδ; however, in a case of an FA system, the focused region may be set to be greater than an actual focused depth in consideration of an operating property. For example, it may be easier for the user to adjust the focus lens 104 to be in the focused region by repeatedly manipulating the focus lens 104 when the focused region is large. Therefore, the focused region may be set as 4 Fδ; however, the focused region may be set to different values, for example, 2 to 6 Fδ.

The focus detecting method described with reference to FIG. 4 is a contrast AF method, and thus, the peak value of the focus detection evaluation value generally corresponds to the focused location; however, in some cases, even if the focus detection evaluation value is at the peak, it may not correspond to the focused location. For example, if the subject includes a point light source, the peak value may not correspond to the focused location. The peak value (e.g., the maximum focus detection evaluation value) is not determined at the focused location, but rather, the focused location may be shown when the smallest value of the focus detection evaluation value is obtained. In the contrast AF method, the above problem is already well known, and thus, when it is determined that the subject includes the point light source, the determination of the focused location is performed differently. For example, a general subject may use the maximum value of the focus detection evaluation value, and the subject including the point light source uses the minimum value of the focus detection evaluation value. That is, an extreme value (e.g., extreme maximum or extreme minimum) of the focus detection evaluation value may be determined as the focused state. Therefore, in FIG. 4, the determination of the focused location by using the peak value of the focus detection evaluation value may be changed to the determination by using the extreme value of the evaluation value in alternate embodiments.

FIG. 22 is a diagram showing a relation between the manual manipulation of the focus lens 104, the focus detection evaluation value, and the focus aid display 400, described with reference to FIG. 4. A transverse axis denotes the location of the focus lens 104, and a longitudinal axis denotes the focus detection evaluation value. PK denotes the peak location of the focus detection. The focus detection evaluation value at the peak PK is Vpk, and the location of the focus lens 104 at the peak PK (e.g., the focus point) is LVpk. In FIG. 22, reference numeral 21 denotes the manual manipulation of the focus lens 104. The focus lens 104 is moved during the manual manipulation approximately from a location LV2 to LV6. During movement of the focus lens 104, the focus lens 104 passes through the peak location LVpk, and the peak at that time is stored for a predetermined time period (e.g., a peak-hold). Then, the focus lens 104 is driven in an opposite way from LV6.

A direction display region 402 of the FA display 400 indicates a first peak direction in the FA display 400 (e.g., the rotation direction towards the peak), and an FA display region 403 of the FA display 400 indicates a focused state. In addition, a direction display region 404 of the FA display 400 indicates a second peak direction. However, the reference numerals 402 and 404 indicate opposite directions to each other.

In the embodiment described with reference to FIG. 4, the FA display 400 may be shown on a display unit (e.g., on the LCD unit 202 of the viewfinder 201 or the display unit 206) after passing the peak location PK. If the focus lens 104 passes the focused point LVpk, peak-hold information may be obtained, the focused region and the direction in which the focus lens 104 has to be moved to be within the focused region may be set based on the focused point. The focused region may be set as a region Fδ in which the user may not recognize an out-of-focus state. F denotes an aperture value of the lens, and δ denotes an allowable image blur, for example, the allowable image blur may be 33 µm in a digital photographing apparatus based on a 135 format. However, if the Fδ is set as the focused region, the manipulation range is very sensitive and the manipulation may not be performed appropriately when the focus lens 104 is manually driven. Therefore, the focus region is set as 4 Fδ in consideration of an operating property. If the focused region is set as 4Fδ, the user of the digital photographing apparatus 1 may more easily manipulate the focus lens 104 on a nearly center portion of the focused region. The focused region may be empirically determined by using a format of the digital photographing apparatus 1 or a sensitivity of the lens.

In a case where the peak location is obtained by the manual manipulation 21, the focused region is set, and where the focus lens 104 is outside of the focused region, the corresponding direction display region of the FA display 400 may be displayed. For example, at LV5 or LV6 of FIG. 22, an "L" may be displayed to indicate to the user to rotate a focus ring of the lens 100 to a left direction L. In addition, in the focused region, a green light may be displayed to represent the focused state. Therefore, the user of the digital photographing apparatus 1 may repeatedly rotate the focus ring in the right and left directions to stop at a center portion of the focused region.

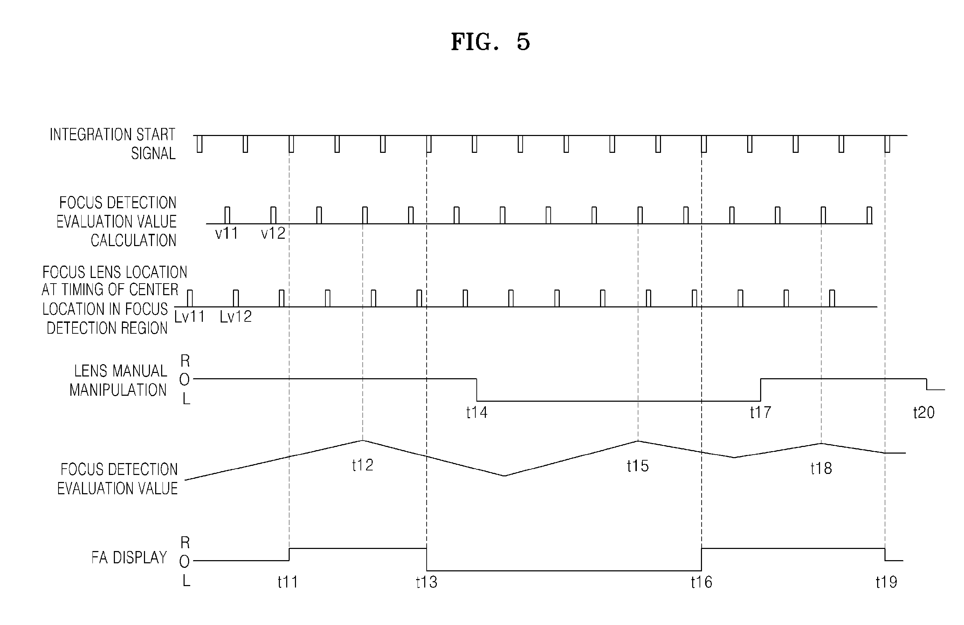

FIG. 5 is a timing diagram showing another example of the FA display 400 when the user manually manipulates the focus lens 104, according to another embodiment. Here, the FA display 400 is shown before obtaining the peak value, or in a case where the peak value may not be obtained.

Referring to FIG. 5, the timing diagram starts when the focus lens 104 is manually rotated in the right direction R. For example, the focus lens 104 may be driven from the infinite direction to the near direction. During driving of the focus lens 104, the focus detection evaluation values are calculated, and the locations of the focus lens 104 correspond to the timings of calculating the evaluation values. As shown in the example of FIG. 5, a first focus detection evaluation value v11 and a second focus detection evaluation value v12 are compared with each other. If v12 is greater than v11, it is determined that a peak location is around the location of the focus lens (Lv12) where the second focus detection evaluation value v12 is obtained, rather than the location of the focus lens (Lv11) where the first focus detection evaluation value v11 is obtained. The second focus detection evaluation value v12 and the information about the focus lens location Lv12 may be obtained through the communication between the replaceable lens 100 and the main body 200 of the digital photographing apparatus 1. Also, in the present example, the FA display 400 is shown at a timing t11 when the lens 100 and the main body 200 communicate with each other. Therefore, since the peak location is towards an end of the driving direction (R) of the focus lens 104, the FA display 400 representing R is shown at the timing t11.

As shown in FIG. 5, the focus detection evaluation value increases to a peak (t12), and then, the focus detection evaluation value starts to decrease. Then, at a next communication timing t13 between the lens 100 and the main body 200 right after t12, it may be determined that the focus detection evaluation value decreases while the focus lens 104 is driven for the right rotation R, and then, the FA display 400 indicates left rotation L. The user of the digital photographing apparatus 1 may view the display, and change the rotation direction of the focus lens 104 to the left rotation L (t14).

After that, the peak is detected again (t15), and it may be determined that the focus detection evaluation value decreases at a next communication timing t16 between the lens 100 and the main body 200, and thus, the FA display 400 indicates right rotation R (t16). As such, the FA display 400 may be shown by using information about the increase/decrease of the focus detection evaluation value and the focus lens 104 may be led to the focused location. The determination of the focused location may be performed in the same manner as that of FIG. 4.

According to the embodiment illustrated in FIG. 5, the FA display 400 may be shown before detecting the peak. That is, the peak location has not been stored between LV2 and LVpk in FIG. 22; however, the FA display 400 representing R may be shown in a direction where the focus detection evaluation value increases. Also, until the peak is detected, the FA display 400 may be shown while representing that the display is temporary, although the FA display 400 does not have a high accuracy due to noise.

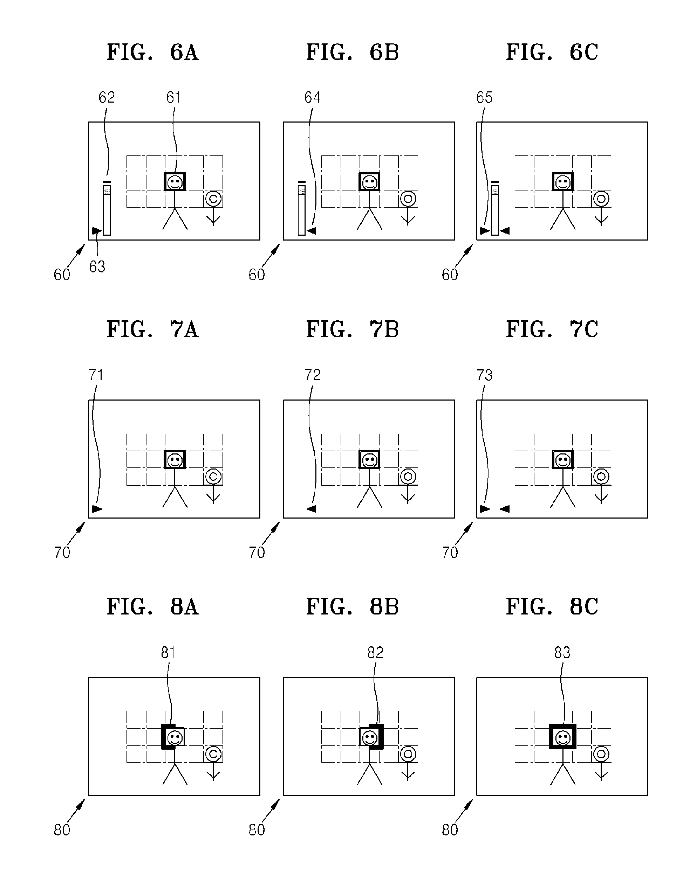

FIGS. 6A through 9B are diagrams showing embodiments of a focus aid (FA) display .

FIGS. 6A through 6C show a live view display having 15 divided focus detection regions according to an embodiment. In the example shown, the center region of the 15 regions is set as the focus detection region. However, in the contrast AF method, the focus detection region may be set at another location in the whole screen in alternative embodiments. In FIG. 6A, the face of a person is shown at a center portion, and thus, a region 61 denoted by a solid line is the focus detection region. In addition, an FA display bar 62 indicates the focus detection evaluation value detected in the focus detection region 61. Here, a peak hold unit of the camera controller 209 is configured to determine and hold the peak location for an update period. In addition, as described with reference to FIG. 4, if the peak location is towards an end of the right rotation R of the focus lens 104, an FA display 60 indicates the right rotation R (63). Referring to FIG. 6B, if the peak location is towards an end of the left rotation L of the focus lens 104, the FA display 60 indicates the left rotation (64). Referring to FIG. 6C, if the current location of the focus lens 104 is around the peak location, for example, within 4 Fδ from the peak location, and in the focused state, the FA display 60 indicates the left rotation and the right rotation at the same time (65). In a case of a low contrast subject having no extreme value in the focus detection evaluation values, the FA display may simultaneously show the left rotation and the right rotation (65) or flicker the left rotation and right rotation (65). The peak hold unit may store a maximum value of the focus detection evaluation value that is detected when the focus lens 104 is driven without reversal of a driving direction by the MF operation and a corresponding focus lens location as a peak value and a peak location for a predetermined time period. The peak hold unit may store a maximum non-linear conversion value of the focus detection evaluation value and a corresponding focus lens location as a peak value and a peak location for a predetermined time period, and the camera controller 209 may determine that the focus lens 104 is in the focused location when a non-linear conversion value of the current focus detection evaluation value is within a predetermined ratio with respect to the peak value stored in the peak hold unit and displays an in-focus state display.

A method of displaying the focus detection evaluation value as the FA display bar 62 shown in FIGS. 6A through 6C will be additionally described below. The focus detection evaluation value may have a large range, for example, from 0 to millions. Even if noise components are removed, the focus detection evaluation value may range from 100 to millions. When the evaluation value is represented as an exponent, the evaluation value may be represented as A*N^B, where A denotes a mantissa unit, N denotes a base unit, and B denotes an exponent unit. For example, in a case of a value 100, if N=10, the evaluation value may be represented as 1*10^2, and A=1, B=2.

If the value is 5 million, the evaluation value may be represented as 5*10^6 when N=10 , and A=5 and B=6. Accordingly, the mantissa unit may be represented as a detailed part of the evaluation value, and the exponent may be represented as a rough part of the evaluation value. The FA display bar 62 may be represented by the detailed part and the rough part instead of the evaluation value.

As one example, it may be defined that C=(B-2)*10.

In addition, since A ranges from 1 to 10 and B ranges from 0 to 6, C may range from 0 to 40.

In addition, when a maximum scale is set as 50, an evaluation value ranging from 100 to 10 million may be displayed by the values of A and C.

Accordingly, the FA display bar 62 of the focus detection evaluation value shown in FIGS. 6A through 6C is an example of representing the variation of the focus detection evaluation value due to the manipulation of the focus lens 104 in the format of the detailed part and the rough part. Division marks between the detailed part and the rough part may be omitted.

FIGS. 7A through 7C show another example of an FA display 70 without displaying the focus detection evaluation value as a bar, compared with FIGS. 6A through 6C. Referring to FIG. 7A, when the focused location is towards the end of the right rotation of the focus lens 104, the FA display 70 is shown in red and right rotation 71 is displayed. Referring to FIG. 7B, when the focused location is towards the end of the left rotation of the focus lens 104, the FA display 70 is shown in red and left rotation 72 is displayed. Referring to FIG. 7C, when the focus lens 104 is in the focused location, the right rotation and the left rotation are displayed simultaneously in green (73) to represent the focused state.

FIGS. 8A through 8C show another example of an FA display 80 in which the focus aid is displayed at boundaries of the focus detection region. Referring to FIG. 8A, when the focused location is towards the end of the right rotation of the focus lens 104, the FA display 80 is shown in red and a right rotation display 81 is shown at a left side of the focus detection region. Referring to FIG. 8B, when the focused location is towards the end of the left rotation of the focus lens 104, the FA display 80 is shown in red and a left rotation display 82 is shown at a right side of the focus detection region. Referring to FIG. 8C, when the focus lens 104 is at the focused location, the entire boundary of the focus detection region is surrounded by a green line (83) to represent the focused state.

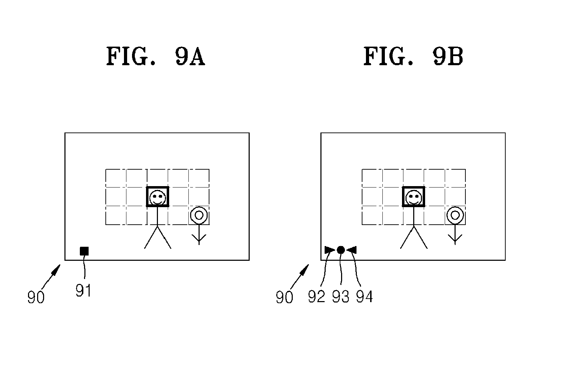

FIG. 9A shows another example of an FA display 90, similar to the FA display 70 shown in FIG. 7C, in which the FA display 90 represents the focused state. The focused state is represented as a green square or green circle (91). In addition, if the direction display regions shown in the screen may interfere with framing of a subject image, or if based on a configuration of the digital photographing apparatus 1, the direction display regions may be turned off by using a setting function in a menu of the digital photographing apparatus 1, the focused state may be displayed only as shown in FIG. 9A.

Also, as shown in FIG. 9B, the focused state and the direction may be displayed together. That is, when the focus lens 104 is at the focused state, a center display 93 is lighted, and when the focus lens 104 is not at the focused state, direction display regions 92 or 94 may be displayed.

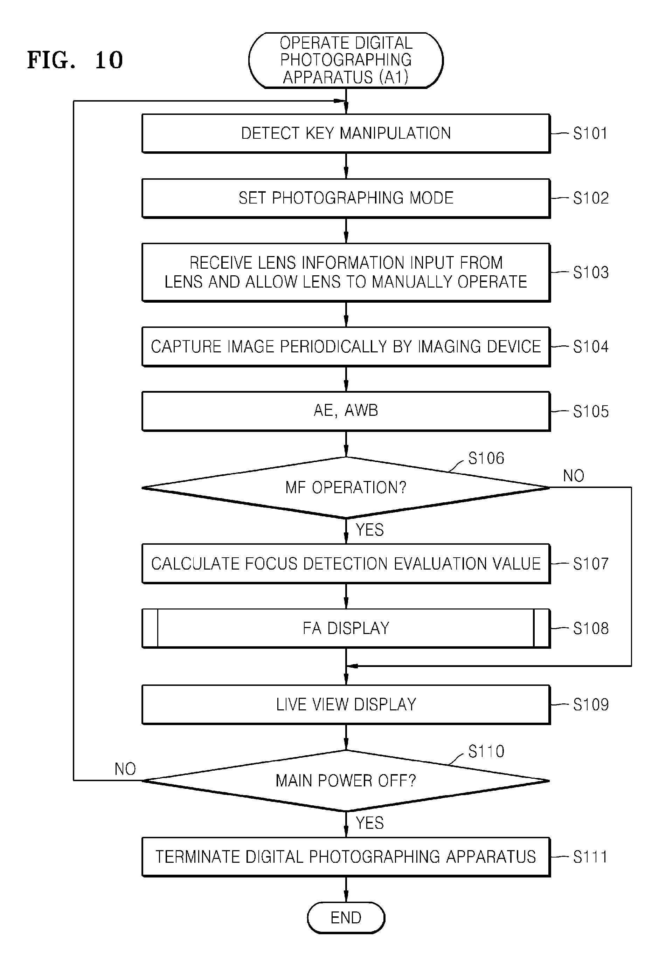

FIGS. 10 through 20 are flowcharts illustrating focus aid methods according to various embodiments.

FIG. 10 is a flowchart illustrating an operation A1 corresponding to a start operation of a digital photographing apparatus 1.

Referring to FIG. 10, when a main switch of the digital photographing apparatus 1 is turned on (ON) to start the digital photographing apparatus 1, a key manipulation is detected in operation S101. An input of a mode setting dial is detected (S102) to receive a selection of a still image capturing mode or a moving picture photographing mode. In operation S103, lens information that is used to operate the digital photographing apparatus 1 is input to the replaceable lens 100. Here, the lens information includes parameters of the lens 100 that are stored in a memory (not shown) of the lens controller 110, for example, information used for the AF, AE, AWB, and image control. In addition, the lens information may include information about a relation between the driving direction of the focus lens 104 and the rotation direction of a focus lens driving ring, and information about the focus lens location that corresponds to the focus detection evaluation value. In the digital photographing apparatus 1 of a replaceable lens type as shown in FIG. 1, a setting state of autofocus or manual focus (AF/MF) is input from the lens 100 in the operation S103. Alternatively, the setting of the AF/MF may be performed in the main body 200 of the digital photographing apparatus 1. In a digital photographing apparatus 1 of a non-replaceable lens type, the setting information is input from a main body 200 of the digital photographing apparatus 1. Based on the AF/MF setting information, an AF mode or an MF mode of the digital photographing apparatus 1 is determined. In the MF mode, the focus ring of the replaceable lens 100 may be manipulated by a user to adjust the focus. In the present embodiment, even in the AF mode, the MF may be performed before turning the switch on (S1) by half-pushing a shutter-release button or after the focused state through the AF. In addition, in the MF mode, it may be selected whether the FA display 400 is to be shown or not.

In addition, in operation S103, information representing whether the focus lens 104 closes to the nearest end in the MF operation is obtained. In addition, in operation S103, if a replaceable lens 100 is used, a manual focus driving permission command may be transmitted to the main body 200 by manipulating the focus ring.

In operation S104, an imaging device 204 starts imaging operations periodically (e.g., capturing images). In operation S105, an AE calculation and an AWB calculation may be performed through a photometric process. In addition, in operation S106, it is determined whether the focus ring of the lens is manually manipulated by a user or not. If the focus ring is manipulated, imaging information is collected periodically to calculate focus detection evaluation values in operation S107. Otherwise, if the focus ring is not manipulated, the process goes to operation S109. In operation S108, an FA display 400 is shown. The FA display process is described above with reference to FIG. 4. Here, the FA display 400 is one of the examples shown in FIGS. 6A through 9B. In addition, if the lens 104 is at the nearest end, a warning message may be displayed.

Next, in operation S109, a live view image is displayed by a live view display operation, as described above. It is determined whether the main switch is turned off (OFF) in operation S110. If the main switch is not turned off, the process goes back to operation S101 to repeatedly perform the live view display operation. Otherwise, if the main switch is turned off, the operation of the digital photographing apparatus 1 is terminated in operation s111.

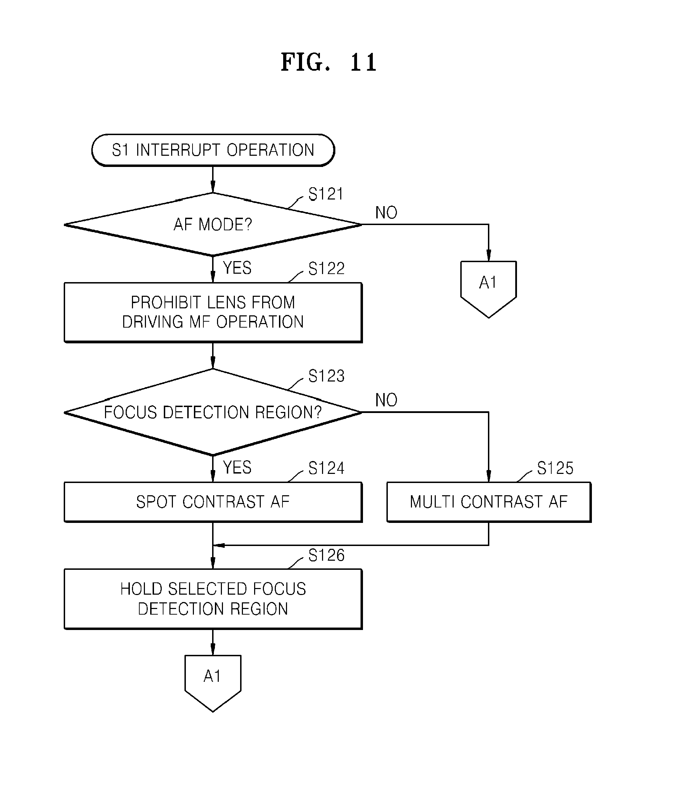

FIG. 11 is a flowchart illustrating an S1 interrupt operation after the processes shown in FIG. 10.

Referring to FIG. 11, after performing the processes shown in FIG. 10 and the live view operation is performed, when the shutter-release button is half-pushed and an S1 switch is turned on, the S1 interrupt operation of FIG. 11 starts. In operation S121, it is determined whether the AF mode is selected or not. If the AF mode is selected, an MF prohibiting command is sent to the lens 100 in operation S122. That is, during the AF driving, the manual manipulation of the focus ring by the user becomes invalid or blocked in order not to perform the MF process. Otherwise, if the AF mode is not selected, the process returns back to operation A1 (S101) shown in FIG. 10, and the digital photographing apparatus 1 waits for the MF manipulation while displaying the live view. In operation S123, a focus detection region is determined. When the mode information of the digital photographing apparatus 1 is obtained in operation S102 shown in FIG. 10, the focus detection region of the AF may be set by manipulating a menu of the digital photographing apparatus 1. Also, it may be selected between a multi-type in which the focus detection is performed in a plurality of regions or a selection type in which a certain focus detection region is set. In a first case, the digital photographing apparatus 1 automatically selects a focus detection region where the main subject is located. In a second case, the user selects a location of the focus detection region. If the selection type is selected in operation S123, a spot contrast AF is performed in operation S124. Otherwise, if the selection type is not selected, a multi contrast AF is performed in operation S125. Here, the detailed description about the contrast AF operation is omitted.

In addition, in operation S126, the focus detection region where the focus is detected is stored. After that, the process goes to operation A1 (S101), and the live view display is repeatedly performed. As described above, the MF operation may be performed in the AF mode or in the MF mode in operation A1.

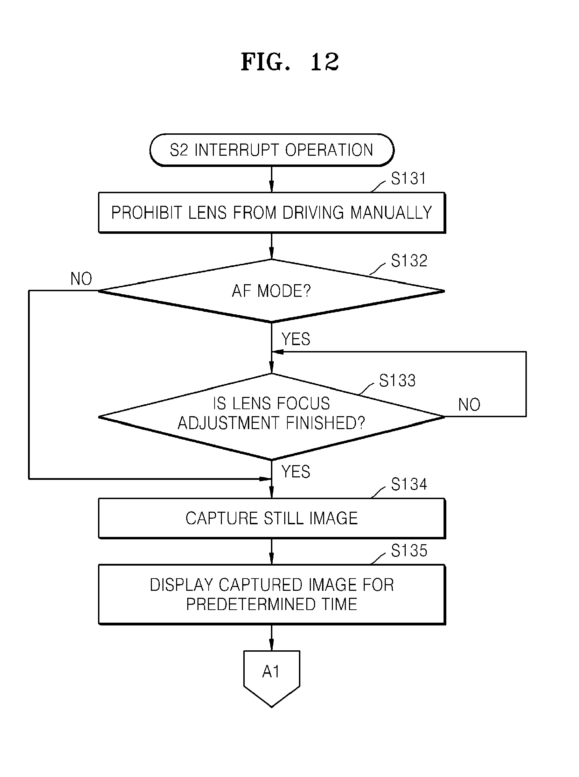

FIG. 12 is a flowchart illustrating an S2 interrupt operation after the operation of the digital photographing apparatus 1 illustrated in FIG. 10. After finishing the AF operation or during the display of the live view image in the MF mode, when the shutter-release button is fully pushed and a switch S2 is turned on, the S2 interrupt operation shown in FIG. 12 starts. In operation S131, a MF prohibiting command is sent to the lens 100 in order not to change images or not to record blurred images during a still image capturing. In addition, in a case of the AF mode in operation S132, if the switch S2 is turned on before finishing a focus adjustment, the digital photographing apparatus 1 waits until the focusing operation of the lens 100 is finished in operation S133. Then, after finishing the focusing operation of the lens 100, the image is captured in operation S134. On the contrary, in the MF mode, operations S132 to S134 may be omitted, and then, the still image is captured. The captured image is displayed for a predetermined time in operation S135, and the process goes back to operation A1 (S101) shown in FIG. 10 to repeatedly display the live view.

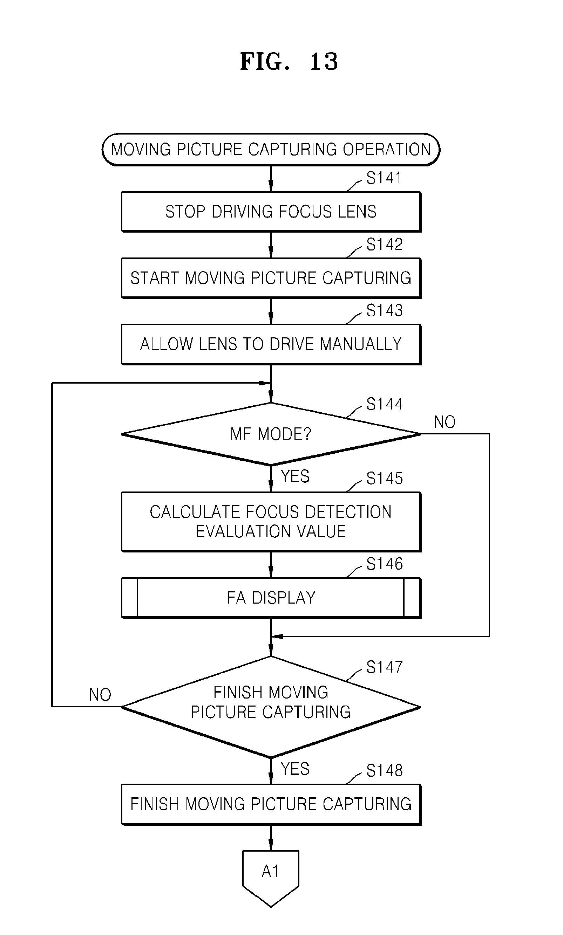

FIG. 13 is a flowchart illustrating a moving picture capturing operation of the digital photographing apparatus 1 illustrated in FIG. 10.

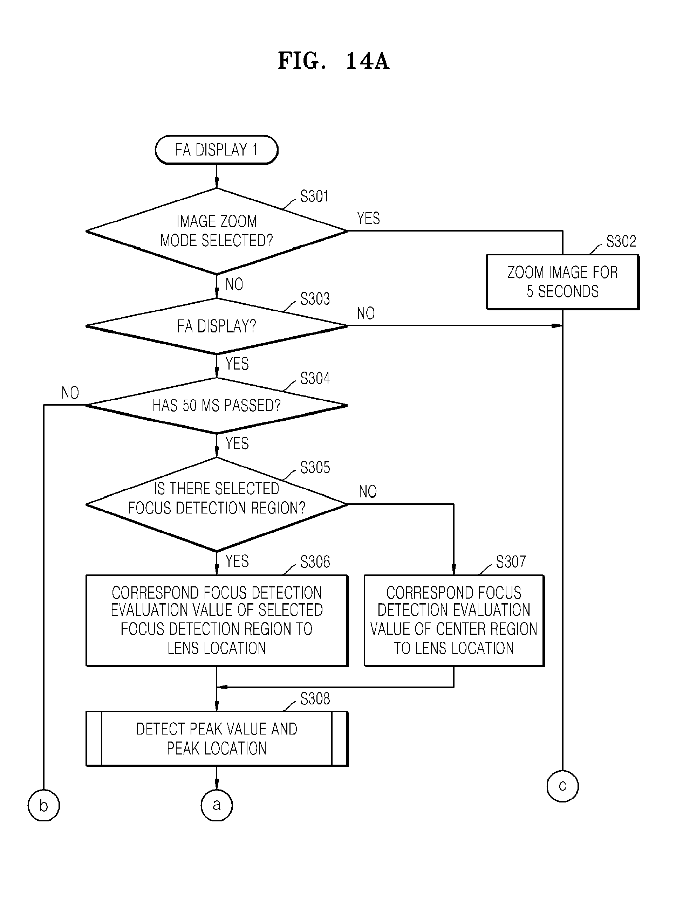

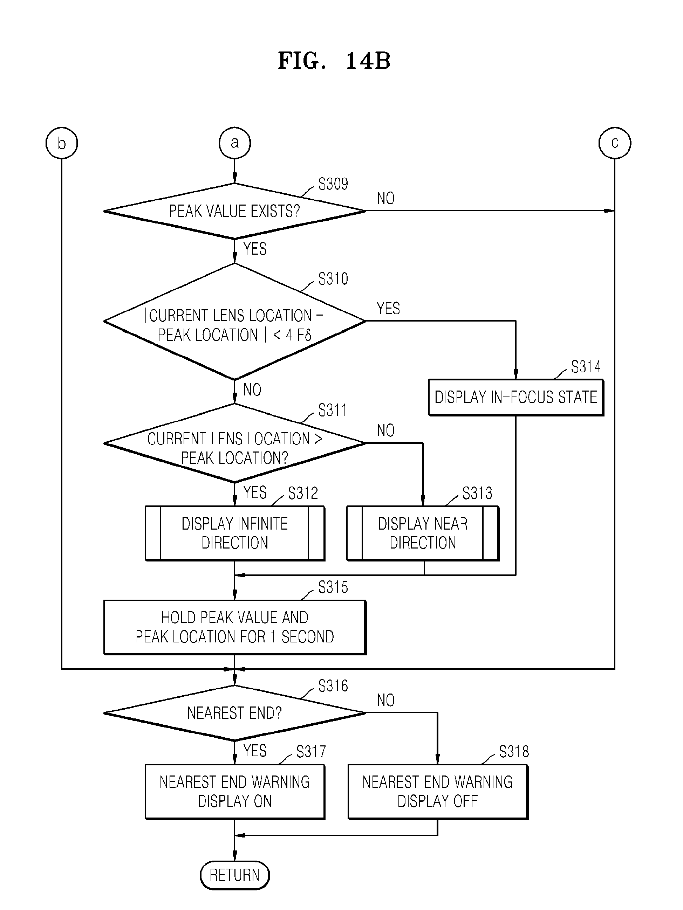

When a switch of a moving picture capturing button is turned on, the moving picture capturing operation of FIG. 13 starts. In operation S141, a focus lens driving prohibition command is sent to the lens. When starting the capturing of the moving picture, the AF operation is stopped. In addition, in operation S142, the moving picture capturing operation starts. In operation S143, an MF driving permission command is sent to the lens. The MF driving permission command allows the user to manipulate the focused location based on the timing, if there is a need to change the focused location during the moving picture capturing. Also, in operation S144, it is determined whether the MF operation is performed, and if the MF operation is performed, the focus detection evaluation value is calculated in operation S145 and the FA display 400 is shown in operation S146. The FA display 400 will be described below with reference to FIG. 14. Otherwise, if the MF operation is not performed in operation S144, the process goes to operation S147. It is determined whether the moving picture capturing switch is turned on or turned off in operation S147. If the moving picture capturing switch is turned off, the moving picture capturing operation is stopped in operation S148. Otherwise, if the moving picture capturing switch is not turned off, the process returns back to operation S144 and the moving picture capturing operation is continuously performed. Although not shown in the flowchart, the live view image is repeatedly displayed while performing the AE and AWB in the moving picture capturing operation.

FIG. 14 is a flowchart illustrating an "FA display" process according to an embodiment.

The FA display 400 may be shown under an assumption that the focus lens 104 is manually manipulated by the user of the digital photographing apparatus 1. Therefore, during the display of the FA, the focus lens 104 is driven so that the focused location is changed or stopped.

Referring to FIG. 14, as an FA display 1 method according to an example of the FA display 400, it is determined whether an image zoom mode is selected in operation S301. The image zoom mode may be set in the menu of the digital photographing apparatus 1 when the digital photographing mode is selected in operation S102 of FIG. 10, and setting information representing whether the image is to be zoomed or not when the MF operation is performed may be obtained. In the present example, if the image is zoomed, the FA display 400 is not shown, and if the image is not zoomed, the FA display 400 is shown. However, in other examples, the FA display 400 may be shown without regard to whether the image is zoomed or not. In addition, an image zoom region for the image zoom mode may be set as a center portion in the MF mode, and may be set as the focus detection region in the AF mode.

If it is determined that the image zoom mode is set in operation S301, the process goes to operation S302 and the image is zoomed for a time period, for example, five seconds. In one example, every time this process ends, the time period of 5 seconds is reset. For example, if the MF operation is continuously performed, the zoom is continued, and if 5 seconds have passed without performing the MF operation, the zoom is suspended. In addition, the FA display 400 is not shown, and the process goes to operation S316. Otherwise, if it is determined that the image zoom mode is not set in operation S301, the process goes to operation S303.

In operation S303, it is determined whether the FA display 400 is selected to be shown, which may vary depending on setting information representing whether the FA display 400 is to be shown in the MF operation, which may be set through the menu of the digital photographing apparatus 1 in operation S102 shown in FIG. 10. If it is determined that the FA display 400 is selected to be shown in operation S303, the process goes to operation s304, and if it is determined that the FA display 400 is set to not be shown in operation S303, the process goes to operation S316 so as not to show the FA display 400.

In operation S304, it is determined whether a display update period (e.g., 50 ms) has passed. If 50 ms has passed, the process goes to operation S305. Otherwise, if 50 ms has not passed, the process goes to operation S316, and FA display operations between S305 and s315 are not performed. This is performed in order to prevent the FA display 400 from changing too frequently, and thus, wavering or alternating of the FA display 400 is reduced or prevented, thus the FA display 400 is more stable and the focus ring is more easily manipulated by the user to bring the focus lens to the focus point. Alternative values for the display update period may be set, for example, 80 ms or 100 ms.

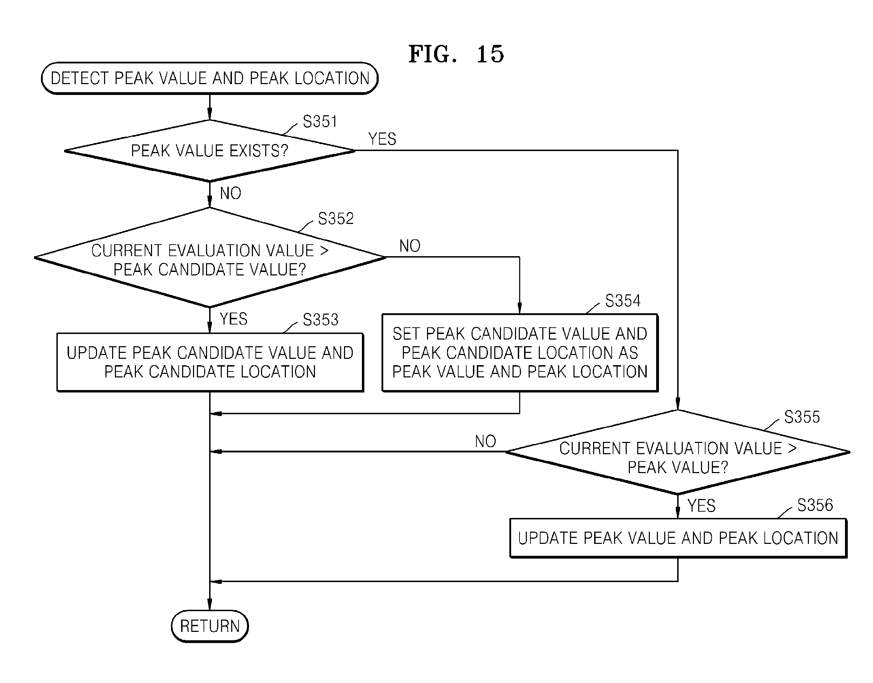

In operation S305, it is determined whether there is a selected focus detection region. In this operation, the focus detection region information stored in operation S126 of FIG. 11 is used. For example, if the focus detection region is set in the menu of the digital photographing apparatus 1, the set region is recorded, and if the focus detection region is selected by the multi AF operation, the selected region is recorded. Before starting the AF operation due to the manipulation of the release switch S1 in the AF mode, a center region is recorded as the focus detection region information. If there is a selected focus detection region in operation S305, it is determined that the focus detection evaluation value in the selected focus detection region corresponds to the focus lens location in operation S306 (e.g., the focus detection evaluation value is matched to the corresponding focus lens location). Otherwise, if there is no selected focus detection region in operation S305, it is determined that the focus detection evaluation value in the center region of the screen corresponds to the focus lens location in operation S307. In addition, in a process of operation S308, the peak value of the focus detection evaluation value and the peak location at the peak value are detected. The process for the peak value and the peak location will be described with reference to FIG. 15.

Next, in operation S309, it is determined whether there is a peak value of the focus detection evaluation value, and if there is no peak value, the process goes to operation S316. Otherwise, if there is a peak value, the process goes to operation S310 to determine whether an absolute value of the difference between the focus lens location and the peak location is less than 4 Fδ. If the absolute value of the difference is less than 4 Fδ, it is determined that the focus lens 104 is in the focused range and the process goes to operation S314 to display the focused state (e.g., an in-focus state). Otherwise, if the absolute value of the difference between the current focus lens location and the peak location is equal to or greater than 4 Fδ in operation S310, it is determined that the focus lens 104 is not in the focused range and the process goes to operation S311. In operation S311, the current focus lens location and the peak location are compared with each other, and if the current focus lens location is greater than the peak location, the process goes to operation S312 to display an infinite direction.

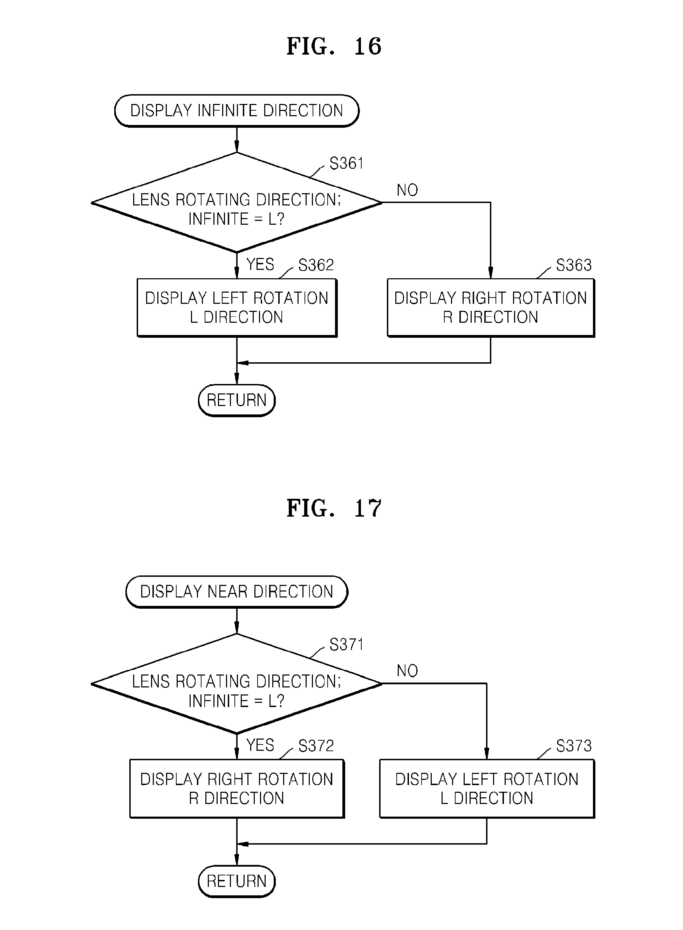

In one example, an origin of the focus lens location may be set as a mechanical location at the infinite direction side, a location determined by a designer of the digital photographing apparatus 1, or a user adjustment. In addition, it may be assumed that a counter that increases when the focus lens 104 is moved towards the near direction is used. Therefore, as the numerical value of the counter increases, it may be determined that the focus lens 104 is located closer to the near direction side. However, a digital photographing apparatus 1 may operate in an opposite way (e.g., with the origin at the near direction side). Here, a process in the infinite direction will be described with reference to FIG. 16. Based on the characteristic of the replaceable lens 100, the process may be applied to a case where the rotation direction to the infinite direction is different. In operation S311, the current focus lens location and the peak location are compared to each other, and if the peak location is greater than the current focus lens location, the process goes to operation S313, and the near direction is displayed. The process of the near direction will be described with reference to FIG. 17. In operations S312, S313, and S314, the FA display 60 described with reference to FIG. 6 may be displayed, and the focus detection evaluation value may be displayed as a bar with the display of the focus lens direction or the display of the focused state.

Next, in operation S315, the peak value and the peak location are displayed for an update period after the reference of the focused location (e.g., for one second). The update period may also be used for the update period of the focus detection evaluation value displayed as the bar 62 in the FA display 60 shown in FIG. 6 and for the peak hold. The user may more easily manipulate the focus lens 104 to adjust the focus in the MF operation while viewing the peak hold display of the FA display 60 during the update period.

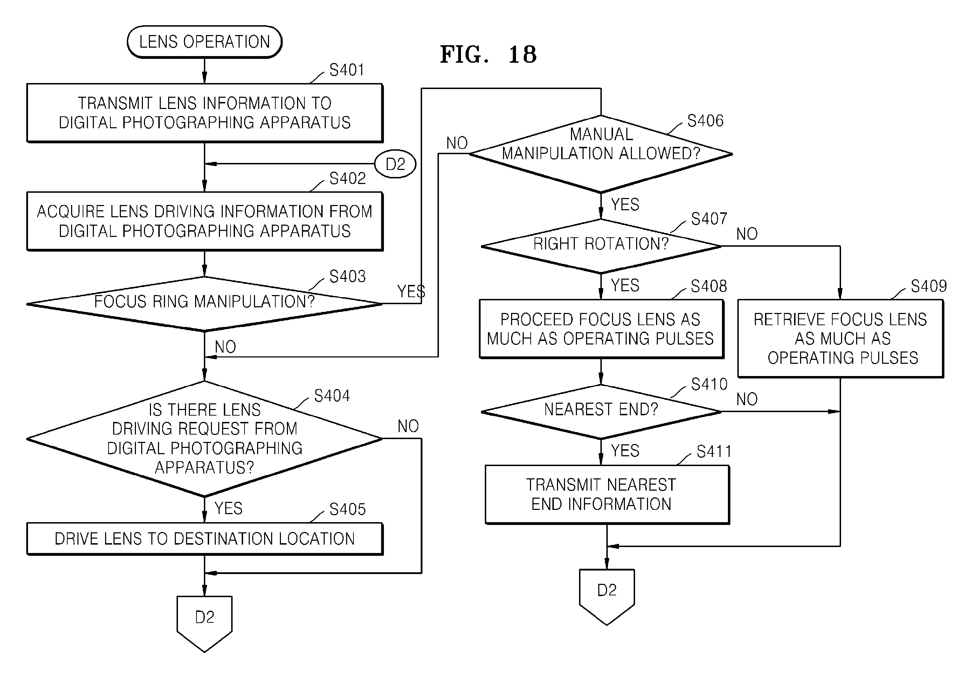

In operation S316, it is determined whether the focus lens 104 reaches the nearest end during the focus ring manipulation by the user. The determination is made by using information that is set in operation S411 (FIG. 18) and transmitted from the lens 100 to the digital photographing apparatus 1. If the focus lens 104 is at the nearest end, a warning alarm is displayed in operation S317. The nearest warning display may be shown as characters or by a flickering of the direction display regions of the FA display 400 (e.g., R or L). Otherwise, if the focus lens 104 is not at the nearest end, the process goes to operation S318 and the warning display is turned off.

FIG. 15 is a flowchart illustrating processes of detecting the peak value and the peak location. Upon entering the process, it is determined whether there is a peak value of the focus detection evaluation value in operation S351. If there is no peak value, the process goes to operation S352 where a current focus detection evaluation value and a peak candidate value are compared with each other. Here, the peak candidate value is a temporary evaluation value until the peak value is confirmed. When the digital photographing apparatus 1 starts to operate, an initial value for the peak candidate value is set as 0. If the current focus detection evaluation value is greater than the peak candidate value, the process goes to operation S353, and the peak candidate value and a peak location candidate value are updated with the current focus detection evaluation value and a corresponding location of the focus lens 104, respectively. That is, the largest value of the detected values that have been detected so far is recorded as the peak candidate value until the peak value is calculated. In operation S352, otherwise, if the current focus detection evaluation value is less than the peak candidate value, the process goes to operation S354 and the peak value and the peak location are updated with the peak candidate value and the peak candidate location, respectively. Otherwise, if there is a peak value in operation S351, the process goes to operation S355 in which the current focus detection evaluation value is compared with the peak value. If the current focus detection evaluation value is greater than the peak value, the process goes to operation S356 to update the peak value and the peak location. For example, after calculating the peak value, the largest value is continuously recorded as the peak value, and the peak value is returned to S308 in FIG. 14A.

FIG. 16 is a flowchart illustrating processes of the infinite direction display according to an embodiment. In operation S361, lens rotation direction information is determined based on replaceable lens information. For example, it is checked whether the focus lens driving direction in the infinite direction is the left rotation direction of the manipulation of the MF operation of the replaceable lens 100. If the focus lens driving direction in the infinite direction is the left rotation direction, left rotation (L) is displayed (e.g., by the FA display 400) in operation S362. Otherwise, if the infinite direction is not the left rotation direction in operation S361, for example, the right rotation (R) direction, the right rotation (R) is displayed (e.g., by the FA display 400) in operation S363 and the process returns to S312 in FIG. 14B.

FIG. 17 is a flowchart illustrating processes of the near direction display according to an embodiment. In operation S371, lens rotation direction information is determined based on replaceable lens information. For example, it is checked whether the focus lens driving direction in the infinite direction is the left rotation direction of the manipulation of the MF operation of the replaceable lens 100. If the focus lens driving direction in the infinite direction is the left rotation direction, then the right rotation (R) is displayed in operation S372. Otherwise, if the infinite direction is not the left rotation direction in operation S371, the left rotation direction L is displayed in operation S373, and then, the process returns to S313 in FIG. 14B.

FIG. 18 is a flowchart illustrating operations of a replaceable lens 100 according to an embodiment. Referring to FIG. 18, operations of the replaceable lens 100 with respect to the operations of the digital photographing apparatus 1 will be described. In the replaceable lens 100 of the present embodiment, when the focus ring rotates in the right rotation direction R, the focus lens 104 proceeds forward and is driven to the near side (subject direction).

If the replaceable lens 100 is used, the digital photographing apparatus 1 starts to operate first. When the digital photographing apparatus 1 operates, lens information is transmitted to the digital photographing apparatus 1 in operation S401. The lens information is used by the digital photographing apparatus 1 to use the replaceable lens 100, and may include information for the AF, AE, AWB, and image quality control or rotation direction information representing whether the focus lens 104 that is driven in the infinite direction is the L direction or the R direction. In addition, the lens information may include information about the focus lens location corresponding to the focus detection evaluation values.

In operation S402, information about the focus lens driving is obtained from the digital photographing 1. The information may include information about a permission or a prohibition command of the MF operation or information about the focus lens driving for the AF. In operation S403, it is determined whether the focus ring of the replaceable lens 100 is manipulated or not. If the focus ring is manipulated, a pulse signal is generated. Therefore, if the pulse signal is generated, it may be determined that the focus ring is manipulated and the process goes to operation S406. In operation S406, it is determined whether the digital photographing apparatus 1 allows the MF operation. If the MF operation is not allowed, the process goes to operation S404, and if the MF operation is allowed, the process goes to operation S407 to determine a rotation as a right rotation or a left rotation. If it is determined that the focus lens 104 has to rotate in the right direction, the focus lens 104 is driven to rotate in the right rotation direction for at least one operation pulse in operation S408. The number of operation pulses may correspond to the number of pulse signals of operation S403. Otherwise, if it is determined that the focus lens 104 has to rotate in the left rotation direction, the focus lens 104 is driven to rotate in the left rotation direction for at least one operation pulse in operation S409. If the focus lens 104 is driven in the right rotation direction in operation S408, the process goes to operation S410 to determine whether the focus lens 104 has reached the nearest end. If the focus lens 104 reaches the nearest end, information representing that the focus lens 104 reaches the nearest end is transmitted to the digital photographing apparatus 1 in operation S411. Then, the process goes to D2 (S402).

Otherwise, if the focus ring is not manipulated in operation S403 or if the MF operation is not allowed in operation S406, the process goes to operation S404. It is determined whether there is a lens driving request for performing the AF by the digital photographing apparatus 1. If there is a request, the process goes to operation S405 to start the driving of the focus lens 104. Otherwise, if there is no request, the process goes to D2 (operation S402). The driving of the focus lens 104 in one example is a search driving for performing the contrast AF and driving for adjusting the focused location, and both may be performed by driving the focus lens 104 to a destination. The lens operation is ended when the digital photographing apparatus 1 is turned off or the lens is detached.

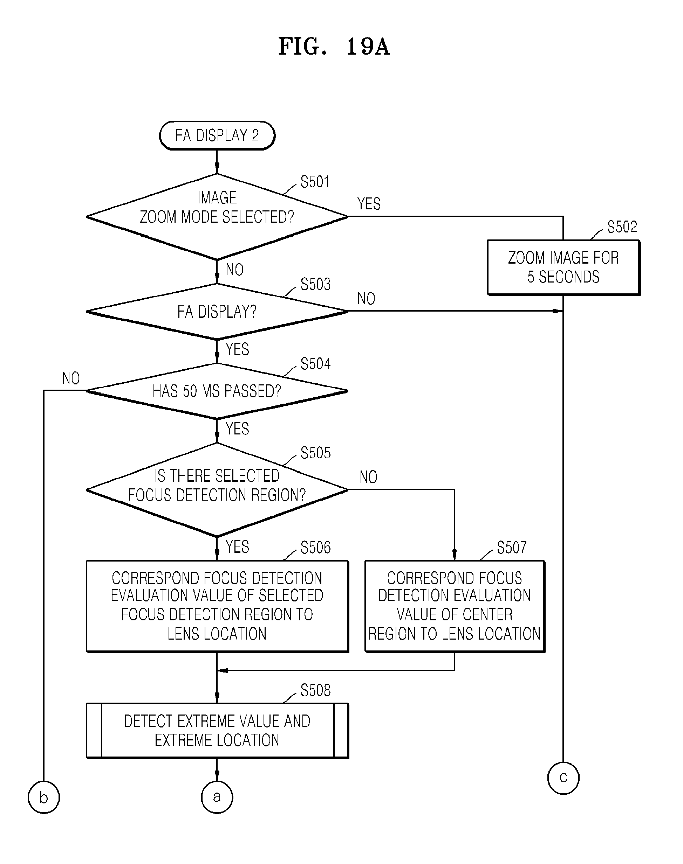

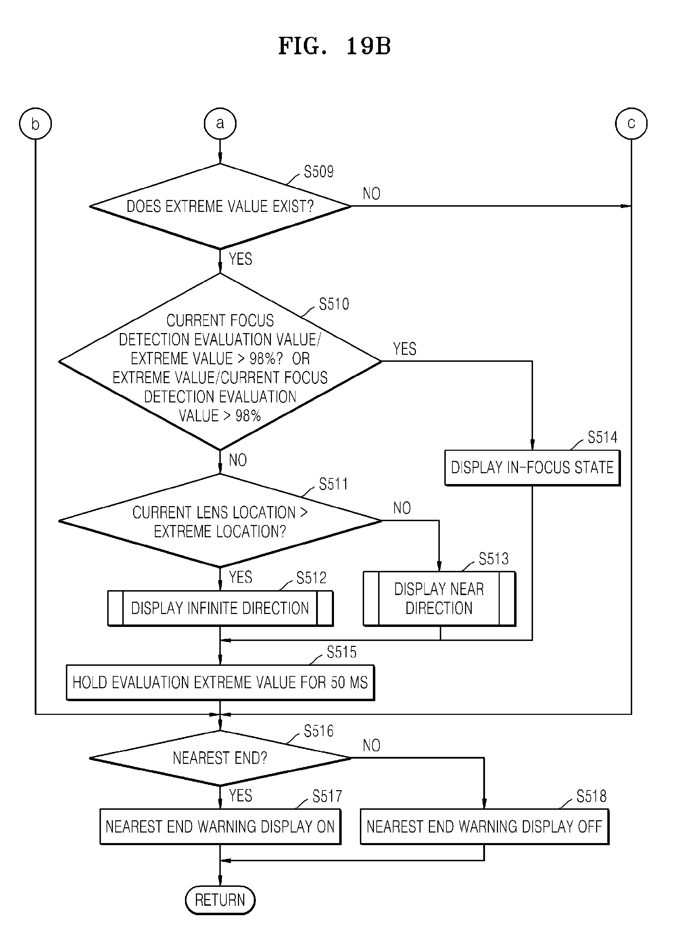

FIG. 19 is a flowchart illustrating processes of an "FA display 2" process according to another embodiment. In the example shown in FIG. 14, the peak value of the focus detection evaluation value is the focused location; however, an extreme value of the focus detection evaluation value is the focused location in the example shown in FIG. 19. In order to determine the focused location precisely if there is a point light source, the extreme value is used (e.g., according to FIG. 19) instead of the peak value. In general, at the focused location of the subject, the focus detection evaluation value is at the peak, but the focus detection evaluation value is lowest at the focused location of a subject that includes a point light source. That is, the focused location corresponds to the location of the focus lens 104 where the extreme value is obtained. Therefore, the embodiment shown in FIG. 19 may be performed by replacing the peak value and the peak location of FIG. 14 with an extreme value and an extreme value location. Therefore, differences from corresponding steps of FIG. 14 (e.g., steps S301-S308 and S312-318 corresponding to S501-S508 and S512-S518) will be described, that is, the determination of the focused state will be described below.

In operation S509, it is determined whether there is an extreme value of the focus detection evaluation value, and if there is no extreme value, the process goes to operation S516. Otherwise, if there is an extreme value, the process goes to operation S510. In operation S510, a ratio between the current focus detection evaluation value and the extreme value is calculated, and if the ratio is 98% or greater, it may be determined to be focused and to display the in-focus state in operation S514. Alternatively, the ratio between the extreme value and the current focus detection evaluation value may be used. If the ratio is not 98% or greater, the current focus lens location and the extreme value location are compared to each other in operation S511 (e.g., analogously to operation S311). If the focus detection evaluation value is displayed as a bar as shown in FIG. 6, a peak hold function is used, and when the focus detection evaluation value reaches the peak value stored in a peak hold unit (e.g., the extreme value), it may be determined to be focused. However, if the peak detection evaluation value reaches about 98% of the peak hold value, it may be determined to be focused, in consideration of the manipulation property of the focus ring, a time delay of the manipulation display, and the calculation deviation. Actually, since the user repeatedly performs the right rotation R and the left rotation L of the focus ring so that the focus lens 104 may be located at a center of the focus range, the MF may be exactly performed even if there is a margin in the numerical value.

The focus detection evaluation value may be used as it is acquired. Otherwise, as described above, the evaluation value may be converted into a mantissa and exponent, and A and C are acquired from the conversion equation and a value of A+C may be referred to as the peak value. Then, when the ratio with respect to the peak value is about 98% or greater, it may be determined to be focused. Here, since the value of A+C may not exceed the peak value, the above determination may be performed.

In addition, if it is determined that the subject includes a point light source, the extreme value is the minimum value. Thus, if a ratio between the extreme value and the current focus detection evaluation value is 98% or greater, it may be determined to be focused. That is, the determination manner may vary depending on the subject.

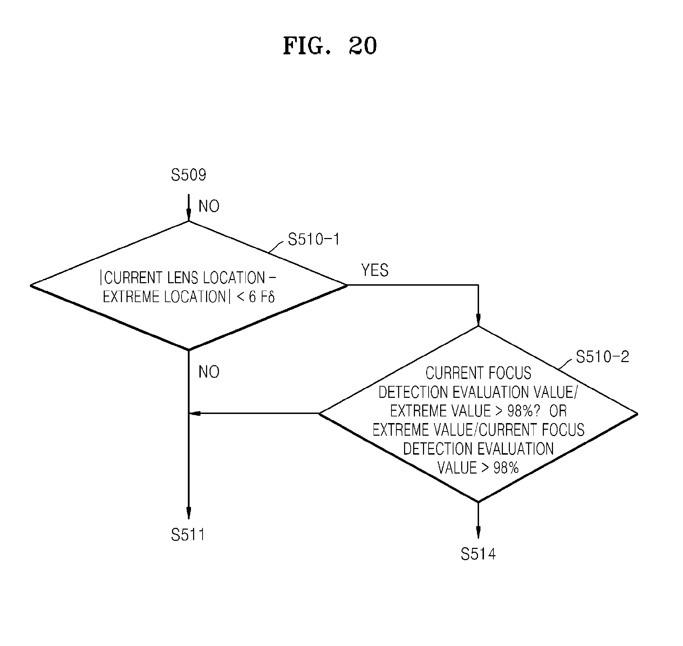

FIG. 20 is a flowchart illustrating another example of determining the focused state in FIG. 19, in which the extreme value and the extreme value location are considered. In operation S510 of FIG. 19, the determination method shown in FIG. 20 may be used. Referring to FIG. 20, a difference between the current focus lens location and the extreme value location is calculated (S510-1). If an absolute value of the difference is 6 Fδ or less, a ratio between the current focus detection evaluation value and the extreme value is calculated (S510-2), and then, it may be determined to be focused when the ratio is 98% or greater (S514). That is, both the extreme value location and the extreme value are used to improve the reliability of the determination.

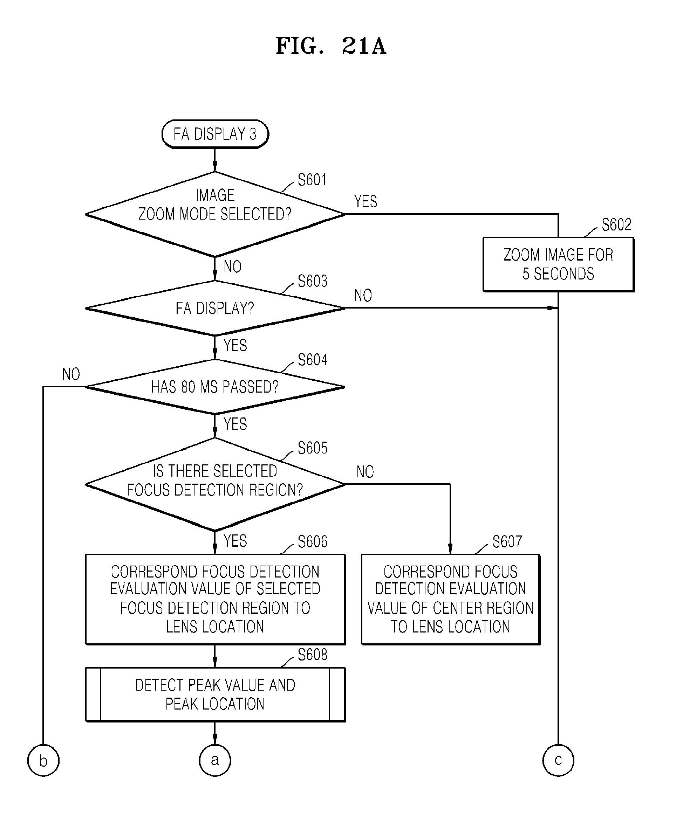

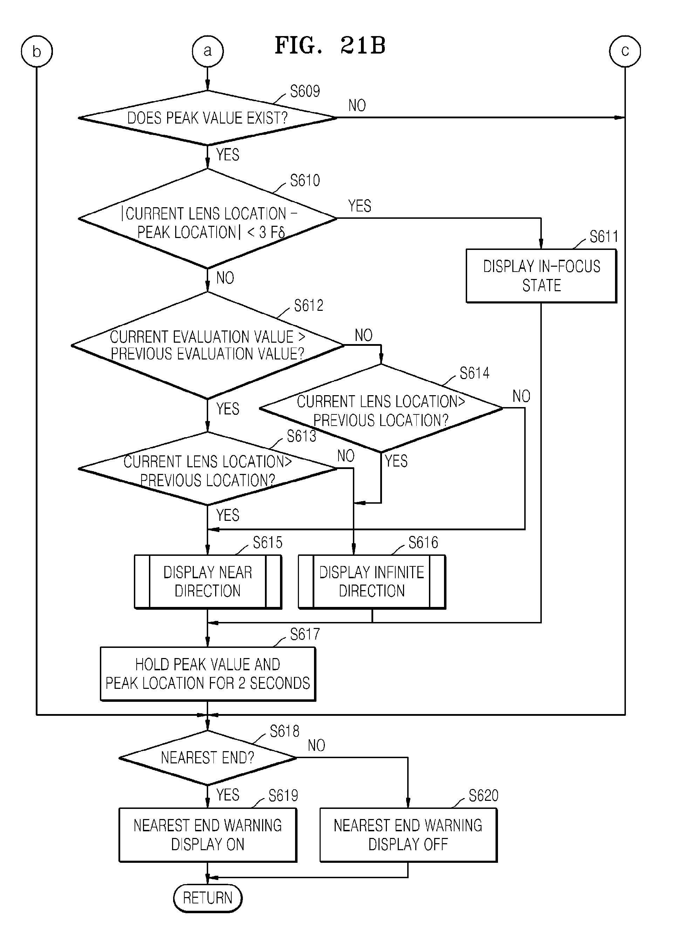

FIG. 21 is a flowchart illustrating processes of an "FA display 3" process according to another embodiment. In the FA display process illustrated in FIG. 14 or the FA display 2 process illustrated in FIG. 19, the focused location is found by using the peak value or the extreme value of the focus detection evaluation value, respectively, and the FA is displayed toward the focused location. However, referring to FIG. 21, the FA is displayed as a relation of the sizes of the focus detection evaluation values. Here, descriptions of the components that are illustrated with reference to FIGS. 14 and 19 are not provided, and differences will be described below. In addition, values such as a standby time or a detection interval may vary, and thus, the above values may be changed here.

Upon entering the FA display 3 process, the process starts from operation S601. Here, processes from operation S601 to operation S608 are performed in the same order as that illustrated with reference to FIG. 14 (e.g., analogously to S301-S308).

In addition, when the process enters operation S609, it is determined whether there is a peak value of the focus detection evaluation value. If there is no peak value, the process goes to operation S618, and if there is a peak value, it is determined whether an absolute value of a difference between the current focus lens location and the peak location is less than 3 Fδ in operation S610. If the difference is less than 3 Fδ, the subject is determined to be focused, and the process goes to operation S611 to display the focused state. If the absolute value of the difference between the current focus lens location and the peak location is 3 Fδ or greater in operation S610, the subject is not in the focused state, and the process goes to operation S612.

In operation S612, the current focus detection evaluation value and the previous focus detection evaluation value are compared with each other, and then, if the current focus detection evaluation value is greater than the previous focus detection evaluation value, the process goes to operation S613 to compare the current focus lens location with the previous focus lens location.

If the current focus lens location is greater than the previous focus lens location in operation S613, for example, if the current focus lens location is closer to the near direction than the previous focus lens location, the process goes to operation S615 and the near direction is displayed. For example, it is detected that the current focus detection evaluation value increases due to the current MF operation, and then, the FA display representing that the peak location is closer to the near direction than the current focus lens 104 is shown. The process for displaying the near direction is described above with reference to FIG. 17, and thus, descriptions thereof are not provided here.

If the current focus lens location is less than the previous focus lens location in operation S613, for example, the current focus lens location is closer to the infinite direction than the previous focus lens location, the process goes to operation S616 to display the infinite direction. For example, it is detected that the focus detection evaluation value increases due to the current MF operation, and the FA display representing that the peak location is located closer to the infinite direction than the current focus lens location is displayed. The process for displaying the infinite direction is described above with reference to FIG. 16.

In operation S612, the current focus detection evaluation and the previous focus detection evaluation value are compared with each other. If the current focus detection evaluation value is smaller than the previous focus detection evaluation value, the process goes to operation S614 to compare the current focus lens location with the previous focus lens location. If the current focus lens location is greater than the previous focus lens location in operations S614, for example, the focus lens 104 is closer to the near direction than the previous focus lens location, the process goes to operation S616 to display the infinite direction. For example, it is detected that the focus detection evaluation value decreases due to the current MF operation, and the FA display representing that the peak location is located closer to the infinite direction that is opposite to the current location may be displayed.

In addition, if the current focus lens location is less than the previous focus lens location in operation S614, for example, the focus lens 104 is closer to the infinite direction than the previous focus lens location, the process goes to operation S615 to display the near direction. For example, it is detected that the focus detection evaluation value decreases due to the current MF operation, and the FA display representing that the peak location that is located closer to the near direction that is opposite to the current focus lens 104 is performed. In addition, the peak value may be held for two seconds in operation S617. Hereinafter, processes from operation S618 to operation S620 are the same as the operations described with reference to operations S316-S318 of FIG. 14.

According to the above description, the digital photographing apparatus 1 calculates the focus detection evaluation value by using the peak hold unit in the contrast method, and effectively displays the manipulation direction of the focus lens 104 in the MF operation, and thus, the user may easily adjust the focus manually. Also, since the digital photographing apparatus 1 displays the focused state in the MF mode clearly, the user may more easily adjust the focus.

While the invention has been particularly shown and described with reference to exemplary embodiments thereof, it will be understood by those of ordinary skill in the art that various changes in form and details may be made therein without departing from the spirit and scope of the invention as defined by the following claims.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

Although a few preferred embodiments have been shown and described, it will be appreciated by those skilled in the art that various changes and modifications might be made without departing from the scope of the invention, as defined in the appended claims.

## Claims

1. A focus aid system comprising:
a replaceable lens configured to adjust a location of a focus lens in a manual focusing (MF) mode;
a focus lens location detection sensor that outputs focus lens location information about the location of the focus lens;
an imaging device that captures light transmitted through the replaceable lens to generate an image signal for a captured image;
a controller that receives the image signal from the imaging device, calculates a focus detection evaluation value based on the image signal, and matches the calculated focus detection evaluation value to the focus lens location information about the focus lens location;
a peak hold unit that stores a maximum of the focus detection evaluation value and a focus lens location that corresponds to the maximum focus detection evaluation value as a peak value and a peak location, respectively, for a predetermined time period;
a display unit that displays information about a focused state of the focus lens;
wherein the controller determines the focused state based on at least one of a comparison of the focus detection evaluation value with the peak value stored in the peak hold unit or a comparison of the focus lens location and the peak location stored in the peak hold unit, and displays information about the focused state on the display unit.

2. The focus aid system of claim 1, wherein when the focus lens location is within a predetermined range with respect to the peak location, the controller determines that the focus lens is in the focused state and displays an in-focus display.

3. The focus aid system of claim 1, wherein when the focus detection evaluation value is within a predetermined ratio with respect to the peak value, the controller determines that the focus lens is in the focused state and displays an in-focus display.

4. The focus aid system of claim 1, wherein the peak hold unit stores an extreme value of the focus detection evaluation value and a focus lens location that corresponds to the extreme focus detection evaluation value as the peak value and the peak location for the predetermined time period.

5. The focus aid system of claim 1, wherein the peak hold unit stores a maximum value of the focus detection evaluation value that is detected when the focus lens is driven without reversal of a driving direction of an MF operation and a focus lens location that corresponds to the maximum value as the peak value and the peak location for the predetermined time period.

6. The focus aid system of claim 1, wherein the peak hold unit stores a maximum non-linear conversion value of the focus detection evaluation value and a focus lens location that corresponds to the maximum non-linear conversion value as the peak value and the peak location for the predetermined time period, and the controller determines that the focus lens is in the focused location when a non-linear conversion value of the current focus detection evaluation value is within a predetermined ratio with respect to the peak value stored in the peak hold unit and displays an in-focus state display.

7. The focus aid system of claim 7, wherein the controller determines a manual manipulation direction of the focus lens for movement of the focus lens to a focused location based on a comparison of the peak location with a current location of the focus lens, and displays a focus state that includes the manual manipulation direction.

8. The focus aid system of claim 7, wherein the controller records the focus lens location and the focus detection evaluation value at a predetermined interval.

9. The focus aid system of claim 8, wherein the controller determines a current rotation direction of the focus lens based on a comparison of a current focus detection evaluation value with a previous focus detection evaluation value, and displays the manual manipulation direction based on the current operating direction of the focus lens.

10. The focus aid system of claim 8, wherein the controller compares a current focus detection evaluation value with a previous focus detection evaluation value to display a direction that corresponds to the larger focus detection evaluation value as the manual manipulation direction.

11. The focus aid system of claim 7, wherein the controller determines the manual manipulation direction of the focus lens based on the focus lens location and information about a rotation direction of a focus ring, and displays the manual manipulation direction.

12. The focus aid system of claim 7, wherein the display of the manual manipulation direction indicates a rotation direction of the focus lens.

13. The focus aid system of claim 7, wherein the controller calculates the focus detection evaluation value for the captured image from an image signal in a previously set focus detection region.

14. The focus aid system of claim 13, wherein the controller displays the previously set focus detection region with the manual manipulation direction.

15. The focus aid system of claim 7, wherein the controller determines whether there is a maximum focus detection evaluation value, and if there is no maximum focus detection evaluation value, the controller compares the current focus detection evaluation value with the previous focus detection evaluation value and displays a direction that corresponds to the larger focus detection evaluation value as the manual manipulation direction.
